(19)

Europäisches Patentamt
European Patent Office
Office européen des brevets

(11) **EP 4 686 078 A1**

(12) **EUROPEAN PATENT APPLICATION**
published in accordance with Art. 153(4) EPC

(43) Date of publication:
**28.01.2026 Bulletin 2026/05**

(21) Application number: **23928606.5**

(22) Date of filing: **22.03.2023**

(51) International Patent Classification (IPC):
**H02P 21/05** (2006.01)   **H02P 27/08** (2006.01)

(52) Cooperative Patent Classification (CPC):
**H02P 21/05; H02P 27/08**

(86) International application number:
**PCT/JP2023/011084**

(87) International publication number:
**WO 2024/195023 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Mitsubishi Electric Mobility
Corporation
Tokyo 100-8310 (JP)**

(72) Inventors:
• **MORI, Tatsuya**
**Tokyo 100-8310 (JP)**
• **HARADA, Shingo**
**Tokyo 100-8310 (JP)**
• **ISHIKAWA, Kosuke**
**Tokyo 100-8310 (JP)**
• **FUJIMOTO, Chiaki**
**Tokyo 100-8310 (JP)**
• **TOKURA, Yugo**
**Tokyo 100-8310 (JP)**
• **MATSUSHITA, Masaki**
**Tokyo 100-8310 (JP)**

(74) Representative: **Hoffmann Eitle
Patent- und Rechtsanwälte PartmbB
Arabellastraße 30
81925 München (DE)**

(54)   **MOTOR CONTROL DEVICE**

(57)    A motor control device includes an inverter configured to supply power to a motor, and a controller configured to control the motor and output a command signal to the inverter, in which the controller includes a current command value calculator configured to calculate a current command value for two rotating axes of the motor, a voltage command value calculator configured to calculate a fundamental wave command value, which is a voltage command value for the two rotating axes of the motor, through feedback control of the current command value, a cancellation calculator configured to calculate a cancellation voltage command value for suppressing torque pulsation of the motor and suppressing an influence of a disturbance generated in the motor, based on a target current, which is either the current command value or a motor current flowing through the motor, and a rotor position of the motor, and a PWM signal generator configured to generate the command signal to be output to the inverter by using a post-addition fundamental wave command value obtained by adding the cancellation voltage command value to the fundamental wave command value.

FIG. 1

EP 4 686 078 A1

**Description**

TECHNICAL FIELD

The present disclosure relates to a motor control device.

BACKGROUND ART

As an AC motor for variable speed drive, a synchronous motor that uses a permanent magnet in a rotor is used. Such a synchronous motor is also referred to as a brushless motor. In controlling the synchronous motor, how to reduce a torque ripple generated from the synchronous motor is an important concern. For example, Patent Document 1 discloses a technology of setting a feedforward term to cancel a torque ripple by using a magnetic flux/reluctance term that depends on a magnetic flux/reluctance of a motor. Patent Document 2 discloses a technology of superimposing (adding) a vibration voltage command value on the q-axis for canceling a torque ripple, which has the same frequency as a torque ripple generated in an output torque of a rotor and is used to cancel a torque ripple component, on a basic voltage command value on the q-axis.

Citation List

Patent Document

    Patent Document 1: Japanese Patent No. 6760197
    Patent Document 2: Japanese Patent No. 7090812

SUMMARY OF INVENTION

Technical Problem

In paragraphs 0047 and 0048, FIG. 5, and FIG. 12 of Patent Document 1, coefficients Kvdff_L$\varphi$ and Kvqff_L$\varphi$ used for the calculation of magnetic flux/inductance terms are set based on a torque command Tm* and a predicted electrical angle $\theta$ees, and a product of the coefficients and a rotation speed Nm is calculated as magnetic flux/reluctance terms Vdff_L$\varphi$ and Vqff_L$\varphi$ as feedforward voltages. As a method of obtaining the coefficients Kvdff_L$\varphi$ and Kvqff_L$\varphi$, it is disclosed in paragraph 0048 that the coefficients Kvdff_L$\varphi$ and Kvqff_L$\varphi$ are determined in advance through an experiment and analysis according to the predicted electrical angle $\theta$ees and the torque command Tm*. Here, even in a case where the torque command Tm* is given, field-weakening control may be executed in a region where the motor is rotated at a high speed, for example, according to the rotation speed of the motor. In that case, even in a case where the torque command Tm* is kept constant, it is necessary to apply a d-axis current, which is a flux-weakening current, according to the rotation speed of the motor in order to avoid voltage saturation. Therefore, with respect to a certain torque command Tm*, the d-axis current, which is a flux-weakening current, fluctuates according to the rotation speed of the motor. Here, pulsation of an inductance L and/or a magnetic flux $\varphi$ may fluctuate depending on the amount of the applied d-axis current. In the technology of Patent Document 1, the coefficients are determined in advance through an experiment or analysis according to the predicted electrical angle $\theta$ees and the torque command Tm*. Therefore, it is not possible to handle the motor in which the pulsation of the inductance L and/or the magnetic flux $\varphi$ fluctuates due to the fluctuation of the d-axis current caused by the field-weakening control being performed according to the rotation speed of the motor.

In Patent Document 2, feedforward control is performed on the output torque T of the rotor shown in Equation (1) so as to reduce a torque ripple component $\Delta$T, which is a pulsation component of the output torque T shown in Equation (2). Specifically, vibration voltage command values shown in Equations (8) and (9) of Patent Document 2 are calculated. This is a vibration voltage command value for suppressing the torque ripple caused by the change in the output torque T of the rotor, and does not address a change in impedance in a voltage equation of the motor, that is, a disturbance. One of factors that cause the torque ripple is pulsation of the magnetic flux and/or the inductance. This pulsation depends not only on the output torque T but also on the change in impedance in the voltage equation of the motor. The technology of Patent Document 2 does not address the fluctuation of the impedance in the voltage equation, that is, the disturbance.

The present disclosure has been made to solve the above-described problem, and an object of the present disclosure is to provide a motor control device capable of reducing an influence on a motor caused by torque pulsation and a disturbance in a region where the motor is rotated at a high speed.

Solution to Problem

In order to solve the above problem, according to one aspect of the present disclosure, there is provided a motor control device including an inverter configured to supply power to a motor, and a controller configured to control the motor and output a command signal to the inverter, in which the controller includes a current command value calculator configured to calculate a current command value for two rotating axes of the motor, a voltage command value calculator configured to calculate a fundamental wave command value, which is a voltage command value for the two rotating axes of the motor, through feedback control of the current command value, a cancellation calculator configured to calculate a cancellation voltage command value for suppressing torque pulsation of the motor and suppressing an influence of a disturbance generated in the motor, based on a target current, which is either the current command value or a motor current flowing through the motor, and a rotor position of the motor, and a PWM signal generator configured to generate the command signal to be output to the inverter by using a post-addition fundamental wave command value obtained by adding the cancellation voltage command value to the fundamental wave command value.

Advantageous Effects of Invention

According to the present disclosure, it is possible to reduce an influence on a motor caused by torque pulsation and a disturbance in a region where the motor is rotated at a high speed.

BRIEF DESCRIPTION OF DRAWINGS

[FIG. 1] A block diagram showing the configuration of a motor control device according to Embodiment 1.
[FIG. 2] A diagram for describing a generation principle of a switching signal according to Embodiment 1.
[FIG. 3] A diagram showing an example of a torque pulsation waveform according to Embodiment 1.
[FIG. 4] A diagram showing an example of a torque pulsation waveform according to Embodiment 1.
[FIG. 5] A diagram showing an example of an amplitude table for suppressing torque pulsation according to Embodiment 1.
[FIG. 6] A diagram showing an example of a phase table for suppressing torque pulsation according to Embodiment 1.
[FIG. 7] A diagram showing an example of a waveform affected by a disturbance according to Embodiment 1.
[FIG. 8] A diagram showing an example of a waveform affected by a disturbance according to Embodiment 1.
[FIG. 9] A diagram showing an example of an amplitude table for suppressing an influence of a disturbance according to Embodiment 1.
[FIG. 10] A diagram showing an example of a phase table for suppressing an influence of a disturbance according to Embodiment 1.
[FIG. 11] A block diagram showing the configuration of a motor control device according to Embodiment 2.
[FIG. 12] A block diagram showing the configuration of a current command value calculator according to Embodiment 2.
[FIG. 13] A block diagram showing the configuration of a q-axis current limiter according to Embodiment 2.
[FIG. 14] A diagram for describing processing performed by the q-axis current limiter according to Embodiment 2.
[FIG. 15] A diagram for describing processing performed by a q-axis current limiter according to a modification example of Embodiment 2.
[FIG. 16] A block diagram showing the configuration of a motor control device according to Embodiment 3.
[FIG. 17] A diagram showing an example of an amplitude table according to Embodiment 3.
[FIG. 18] A diagram showing an example of a phase table according to Embodiment 3.
[FIG. 19] A diagram for describing the phase table of FIG. 18.
[FIG. 20] A block diagram showing the configuration of a motor control device according to Embodiment 4.

DESCRIPTION OF EMBODIMENTS

[Embodiment 1]

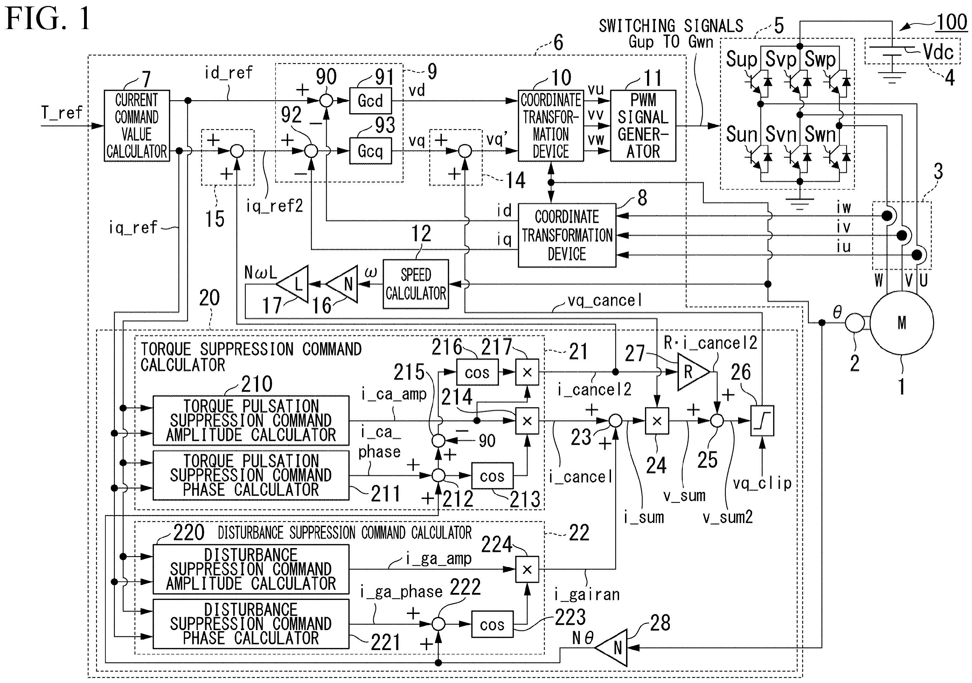

FIG. 1 is a block diagram showing the configuration of a motor control device according to Embodiment 1. As shown in FIG. 1, a motor control device 100 includes a rotation position determination unit 2, a current determination unit 3, an inverter 5, and a controller 6. A DC power supply 4 and a motor 1 are connected to the motor control device 100. The motor control device 100 controls the motor 1 based on a torque command T_ref as a control command input from the outside of the motor control device 100.

The motor 1 is a three-phase AC rotary machine having three-phase windings U, V, and W. In addition, the motor 1 is an AC rotary machine that can be controlled based on two rotating axes. In the present specification, the term "two rotating axes" means two axes that rotate in synchronization with a rotor of the motor 1 and that are orthogonal to each other in a transverse cross section. The term "transverse cross section" means a cross section perpendicular to a central axial line of the rotor. For example, the two rotating axes may be d-q axes. The d-axis is an axis connecting the central axial line of the rotor and a magnetic pole. The q-axis is an axis orthogonal to both the d-axis and the central axial line. **In** addition, the two rotating axes may be $\gamma$-$\delta$ axes. The $\gamma$-axis is an axis that is shifted in a rotation direction from the d-axis. The $\delta$-axis is an axis orthogonal to both the $\gamma$-axis and the central axial line. One of the two rotating axes is referred to as a first axis, and the other is referred to as a second axis. For example, in a case where the d-axis is referred to as a first axis, the q-axis is referred to as a second axis. The q-axis may be the first axis and the d-axis may be the second axis. Similarly, in a case where the $\gamma$-axis is referred to as a first axis, the $\delta$-axis is referred to as a second axis.

In the following, a case where the motor 1 is a permanent magnet synchronous rotary machine and the two rotating axes are the d-q axes will be described. Note that the motor 1 may be, for example, a winding field synchronous rotary machine, an induction rotary machine, or a synchronous reluctance motor. **In** addition, the d-axis and the q-axis in the following disclosure may be replaced with the $\delta$-axis and the $\gamma$-axis.

The rotation position determination unit 2 includes a resolver, an encoder, a magneto resistive (MR) sensor, and the like, and determines a rotor position $\theta$ by using these members. The rotor position $\theta$ is a position in a rotation direction of the rotor of the motor 1. In the present embodiment, the rotor position $\theta$ of the motor 1 is determined using the rotation position determination unit 2. Note that the configuration in which the rotor position $\theta$ of the motor 1 is estimated without using the rotation position determination unit 2 can also be adopted. That is, in the present disclosure, the motor control device 100 does not need to include the rotation position determination unit 2.

The DC power supply 4 is, for example, a battery, a DC-DC converter, a diode rectifier, or a pulse width modulation (PWM) rectifier, and outputs a DC bus voltage Vdc to the inverter 5 described below. The DC power supply 4 includes all devices that output a DC voltage.

The inverter 5 is a power converter that applies a voltage to the motor 1. The inverter 5 applies an AC voltage to the three-phase windings U, V, and W of the motor 1 based on the DC bus voltage Vdc output from the DC power supply 4 and switching signals Gup, Gvp, Gwp, Gun, Gvn, and Gwn output from the controller 6.

The inverter 5 includes switching elements Sup, Svp, Swp, Sun, Svn, and Swn. Each of the switching elements is, for example, a semiconductor switch such as an insulated gate bipolar transistor (IGBT), a bipolar transistor, or a metal oxide semiconductor (MOS) power transistor. **In** addition, a diode or a body diode is connected in anti-parallel to each of the switching elements.

The switching elements Sup, Svp, and Swp on a high potential side in an upper arm are connected to a positive electrode of the DC power supply 4. The switching elements Sun, Svn, and Swn on a low potential side in a lower arm are connected to the switching elements Sup, Svp, and Swp in the upper arm, respectively.

The switching signals Gup, Gvp, and Gwp output from the controller 13 are input to the switching elements Sup, Svp, and Swp in the upper arm, respectively. The switching signals Gun, Gvn, and Gwn output from the controller 13 are input to the switching elements Sun, Svn, and Swn in the lower arm, respectively. The switching elements Sup, Svp, and Swp in the upper arm and the switching elements Sun, Svn, and Swn in the lower arm are turned on or off by the switching signals Gup, Gvp, Gwp, Gun, Gvn, and Gwn output from the controller 13. Here, the on state is a conductive state. The off state is a non-conductive state. In the present specification and the drawings, the switching signals Gup, Gvp, Gwp, Gun, Gvn, and Gwn may be collectively referred to as "switching signals Gup to Gwn".

For example, in a case where the switching signal Gup outputs a signal indicating, for example, "1" as an ON command, the switching element Sup is turned on. In a case where the switching signal Gup outputs a signal indicating, for example, "0 (zero)" as an OFF command, the switching element Sup is turned off. The same applies to the other switching elements Svp, Swp, Sun, Svn, and Swn.

The switching signals Gup to Gwn are generated by a PWM signal generator 11 based on three-phase voltage command values vu, vv, and vw output from a coordinate transformation device 10 of the controller 6. In the present embodiment, the voltage command values vu, vv, and vw used for generating the switching signals Gup to Gwn are command values to which a cancellation voltage command value vq_cancel is added. The cancellation voltage command value vq_cancel is a correction command value obtained by superimposing the voltage command value on vq, which is generated by a cancellation calculator 20 in order to suppress an influence of torque pulsation and a disturbance. Specifically, the cancellation voltage command value vq_cancel is superimposed on a voltage command value vq out of two-phase voltage command values vd and vq before being transformed from the two-phase system to the three-phase system in the coordinate transformation device 10 of the controller 6. The two-phase voltage command values vd and vq and the three-phase voltage command values vu, vv, and vw are equivalent to each other, as they are just a result of a coordinate transformation from the two-phase to the three-phase system. Therefore, the three-phase voltage command values vu, vv, and vw are command values to which the cancellation voltage command value vq_cancel is added. A specific method in which the cancellation calculator 20 generates the cancellation voltage command value will be described in detail below. In addition, a specific method in which the PWM signal generator 11 generates the switching signals Gup to Gwn based on the three-phase voltage command values vu, vv, and vw will be described in detail below.

The current determination unit 3 determines motor currents iu, iv, and iw flowing through the three-phase windings U, V, and W of the motor 1. The current determination unit 3 outputs information indicating the determined motor currents iu, iv, and iw to the controller 6. For the current determination unit 3, any method of determining a phase current may be adopted. In addition, the current determination unit 3 may determine the motor currents iu, iv, and iw by using voltages at both ends of a shunt resistor (not shown) connected in series to each of the switching elements Sun, Svn, and Swn on the lower potential side in the lower arm of the inverter 5, and the switching signals Gun, Gvn, and Gwn. In addition, the motor currents iu, iv, and iw may be determined by using a known "lower arm two-shunt method" or a known "bus one-shunt determination method".

The controller 6 uses the torque command T_ref, the motor currents iu, iv, and iw, and the rotor position θ as input values, and generates the switching signals Gup to Gwn for driving the inverter 5 based on these values. The controller 6 outputs the generated switching signals Gup to Gwn to the inverter 5. The controller 6 is, for example, a PWM controller that outputs the switching signals Gup to Gwn via a discrete time calculator such as a microcomputer or a digital signal processor (DSP). The controller 6 includes a current command value calculator 7, a coordinate transformation device 8 for determination, a current controller 9, a coordinate transformation device 10 for control, the PWM signal generator 11, a speed calculator 12, an adder 14, an adder 15, an amplifier 16, an amplifier 17, and the cancellation calculator 20.

The current command value calculator 7 calculates current command values id_ref and iq_ref, which are current command values in a d-q coordinate system, based on the torque command T_ref. For example, the current command value calculator 7 calculates the current command value id_ref using Equation (1-1). In addition, the current command value calculator 7 calculates the current command value iq_ref using Equation (1-2). T_ref is a torque command, and Kt is a torque constant [Nm/A].

$$id\_ref = 0 \ ... \ \text{Equation (1-1)}$$

$$iq\_ref = T\_ref/Kt \ ... \ \text{Equation (1-2)}$$

The current command value calculator 7 sets the current command value id_ref on the d-axis to 0 (zero) as shown in Equation (1-1). In addition, the current command value calculator 7 sets the current command value iq_ref on the q-axis to a value obtained by multiplying the torque command T_ref by 1/Kt as shown in Equation (1-2). id_ref is also called a "field-weakening current command value", and iq_ref is also called a "torque current command value". As a method for the current command value calculator 7 to calculate the current command value, max torque per ampere (MTPA) control, max torque per voltage (MTPV) control, and flux weakening control, which are known technologies, or a combination thereof may be adopted. A method of calculating the current command values id_ref and iq_ref with limited voltage utilization rates will be described in Embodiment 2 described below.

The coordinate transformation device 8 performs coordinate transformation based on the three-phase motor currents iu, iv, and iw determined by the current determination unit 3 and the rotor position θ determined by the rotation position determination unit 2. As a result, the coordinate transformation device 8 calculates the motor currents id and iq in the two rotating axes (d and q axes), and outputs the motor currents id and iq after the coordinate transformation, which are calculation results, to the current controller 9.

The adder 15 adds a torque pulsation suppression command value i_cancel2 calculated by the cancellation calculator 20 to the current command value iq_ref calculated by the current command value calculator 7, and outputs a current command value iq_ref2 after the addition to the current controller 9.

The current controller 9 calculates the fundamental wave command values vd and vq, which are the voltage command values in the two rotating axes (d and q axes) to the motor 1, through feedback control with respect to the current command value id_ref output from the current command value calculator 7 for the d-axis and the current command value iq_ref2 after the addition output from the adder 15 for the q-axis. The current controller 9 calculates the fundamental wave command values vd and vq in the two rotating axes (d and q axes) based on the current command value id_ref, the current command value iq_ref2, and the motor currents id and iq in the two rotating axes (d and q axes) output from the coordinate transformation device 8.

The current controller 9 includes a subtractor 90, a d-axis current controller 91, a subtractor 92, and a q-axis current controller 93.

The subtractor 90 calculates a d-axis current deviation ed, which is a deviation between the current command value id_ref on the d-axis and the motor current id on the d-axis, and outputs the calculated d-axis current deviation ed to the d-axis current controller 91. The d-axis current controller 91 calculates the fundamental wave command value vd such that the d-axis current deviation ed is 0 (zero) by using a control method such as P control or PI control. The d-axis current controller 91 outputs the calculated fundamental wave command value vd to the coordinate transformation device 10.

The subtractor 92 calculates a q-axis current deviation eq, which is a deviation between the current command value iq_ref2 on the q-axis and the motor current iq on the q-axis, and outputs the calculated q-axis current deviation eq to the q-axis current controller 93. The q-axis current controller 93 calculates the fundamental wave command value vq such that the q-axis current deviation eq is 0 (zero) by using a control method such as P control or PI control. The q-axis current controller 93 outputs the calculated fundamental wave command value vq to the adder 14.

The adder 14 adds the cancellation voltage command value vq_cancel calculated by the cancellation calculator 20 to the fundamental wave command value vq calculated by the q-axis current controller 93, and outputs a fundamental wave command value vq' after the addition to the coordinate transformation device 10.

The coordinate transformation device 10 performs coordinate transformation based on the fundamental wave command values vd and vq' and the rotor position θ determined by the rotation position determination unit 2, and calculates the fundamental wave command values vu, vv, and vw which are the three-phase voltage command values. Since the fundamental wave command values vu, vv, and vw calculated by the coordinate transformation device 10 are calculated by using the fundamental wave command value vd and the fundamental wave command value vq' after adding the cancellation voltage command value vq_cancel, the fundamental wave command values vu, vv, and vw reflect the cancellation voltage command value vq_cancel. The coordinate transformation device 10 outputs the calculated fundamental wave command values vu, vv, and vw to the PWM signal generator 11.

The PWM signal generator 11 outputs pulse width modulation (PWM)-modulated switching signals Gup to Gwn, based on the fundamental wave command values vu, vv, and vw output from the coordinate transformation device 10.

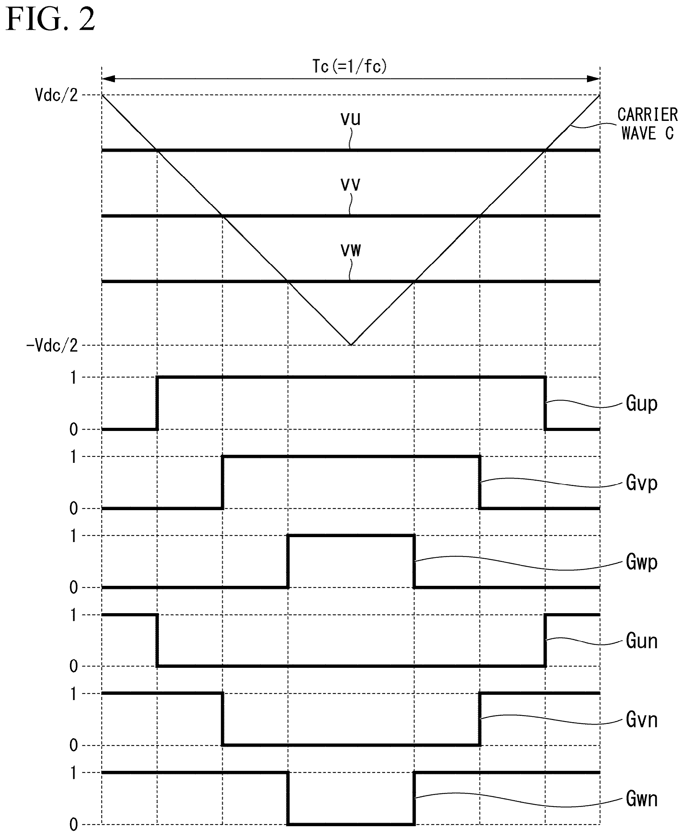

Here, a method for the PWM signal generator 11 to generate the switching signals Gup to Gwn will be described with reference to FIG. 2. FIG. 2 is a diagram for describing the generation principle of the switching signal in Embodiment 1. FIG. 2 shows time-series changes of the fundamental wave command values vu, vv, and vw, a carrier wave C which is a carrier triangular wave having a period Tc (frequency fc), and the switching signals Gup to Gwn. In FIG. 2, a horizontal axis represents a time, and a vertical axis represents a signal level. The PWM signal generator 11 generates the switching signals Gup to Gwn by comparing the fundamental wave command values vu, vv, and vw with the carrier wave C.

Specifically, in a case where the fundamental wave command value vu is larger than the carrier triangular wave C, the PWM signal generator 11 sets the switching signal Gup to, for example, "1" as an ON command and sets the switching signal Gun to "0 (zero)" as an OFF command. On the other hand, in a case where the fundamental wave command value vu is smaller than the carrier wave C, the PWM signal generator 11 sets the switching signal Gup to "0 (zero)" as an OFF command and sets the switching signal Gun to "1" as an ON command.

In addition, in a case where the fundamental wave command value vv is larger than the carrier triangular wave C, the PWM signal generator 11 sets the switching signal Gvp to, for example, "1" as an ON command and sets the switching signal Gvn to "0 (zero)" as an OFF command. On the other hand, in a case where the fundamental wave command value vv is smaller than the carrier wave C, the PWM signal generator 11 sets the switching signal Gvp to, for example, "0 (zero)" as an OFF command and sets the switching signal Gvn to "1" as an ON command.

In addition, in a case where the fundamental wave command value vw is larger than the carrier triangular wave C, the PWM signal generator 11 sets the switching signal Gwp to, for example, "1" as an ON command and sets the switching signal Gwn to "0 (zero)" as an OFF command. On the other hand, in a case where the fundamental wave command value vw is smaller than the carrier wave C, the PWM signal generator 11 sets the switching signal Gwp to "0 (zero)" as an OFF command and sets the switching signal Gwn to "1" as an ON command.

A short-circuit prevention time, that is, a dead time may be provided for the switching signals Gup to Gwn such that the switching elements Sup, Svp, and Swp in the upper arm and the switching elements Sun, Svn, and Swn in lower arm in the inverter 5 are not turned on simultaneously.

Returning to the description of FIG. 1, the speed calculator 12 determines a rotational angular velocity ω of the motor 1 based on the rotor position θ of the motor 1 determined by the rotation position determination unit 2. The speed calculator 12 calculates the rotational angular velocity ω of the motor 1 by differentiating or subtracting the rotor position θ, and outputs the calculated rotational angular velocity ω. The rotational angular velocity ω of the motor 1 output here is a rotational angular velocity of an electrical angle in the motor 1, and matches a rotational angular velocity of a mechanical angle multiplied by the number of pole pairs of the motor 1.

The amplifier 16 calculates a value (Nω) obtained by multiplying the rotational angular velocity ω output from the speed calculator 12 by a constant N, and outputs the calculated value (Nω) to the amplifier 17. The constant N here is the order of the torque pulsation generated by the motor 1 to be suppressed. For example, in a case where a frequency component of the torque pulsation generated by the motor 1 that corresponds to six times a fundamental wave frequency (frequency in the fundamental wave command values vu, vv, and vw described above) is to be suppressed, "6" is set as the constant N. Hereinafter, a frequency component corresponding to N times the fundamental wave frequency may be referred to as an "Nth-order frequency component in terms of electrical angle".

The amplifier 17 calculates a value (NωL) obtained by further multiplying a value obtained by multiplying the rotational angular velocity ω by a constant N, which is output from the amplifier 16, by a constant L, and outputs the calculated value (NωL) to the cancellation calculator 20. The constant L here is the inductance of the motor 1.

The cancellation calculator 20 calculates the cancellation voltage command value vq_cancel and the torque pulsation suppression command value i_cancel2 based on the current command values id_ref and iq_ref output from the current command value calculator 7, the rotor position θ output from the rotation position determination unit 2, and the value (NωL) output from the amplifier 17.

The cancellation calculator 20 includes a torque suppression command value calculator 21, a disturbance suppression command value calculator 22, an adder 23, a multiplier 24, an adder 25, a limiter 26, an amplifier 27, and an amplifier 28.

The torque suppression command value calculator 21 calculates torque pulsation suppression command values i_cancel and i_cancel2 based on the current command values id_ref and iq_ref and the rotor position 0. The torque pulsation suppression command values i_cancel and i_cancel2 are both current command values for suppressing the torque pulsation. The torque pulsation suppression command values i_cancel and i_cancel2 are sine waves having the same amplitude and different phases.

The torque suppression command value calculator 21 includes a torque suppression command amplitude calculator 210, a torque suppression command phase calculator 211, an adder 212, a cosine calculator 213, a multiplier 214, a subtractor 215, a cosine calculator 216, and a multiplier 217.

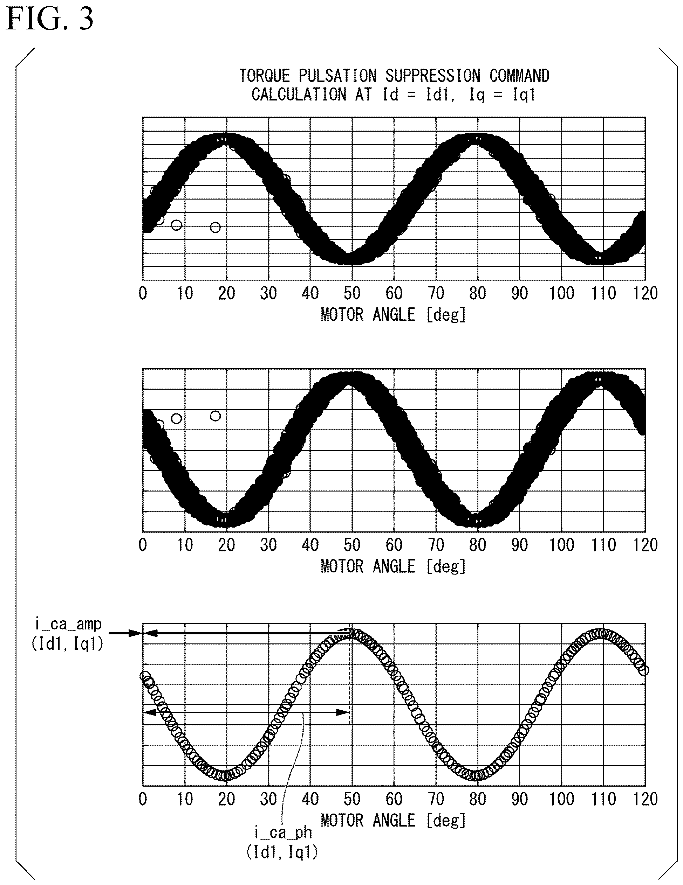

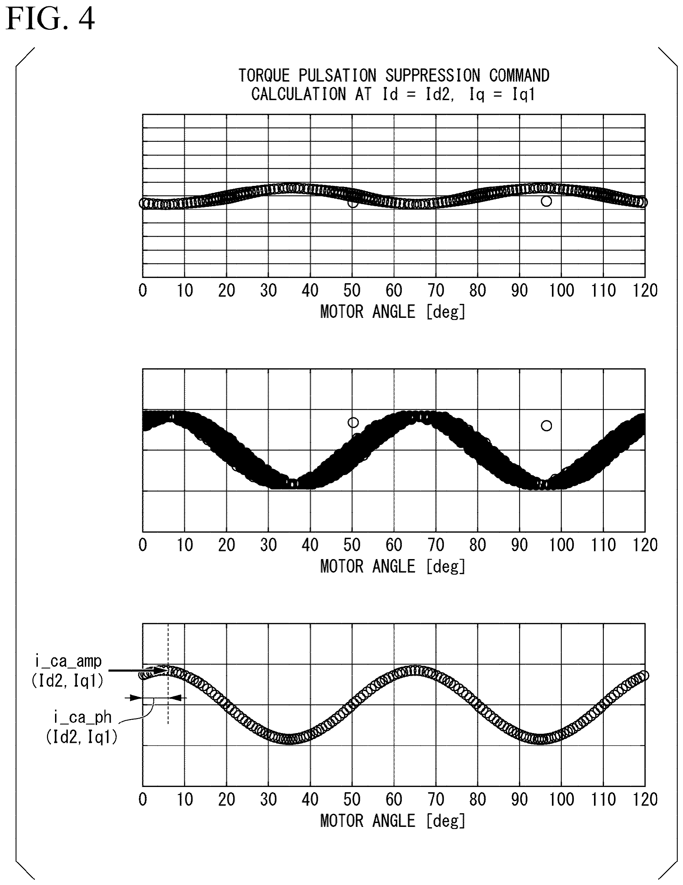

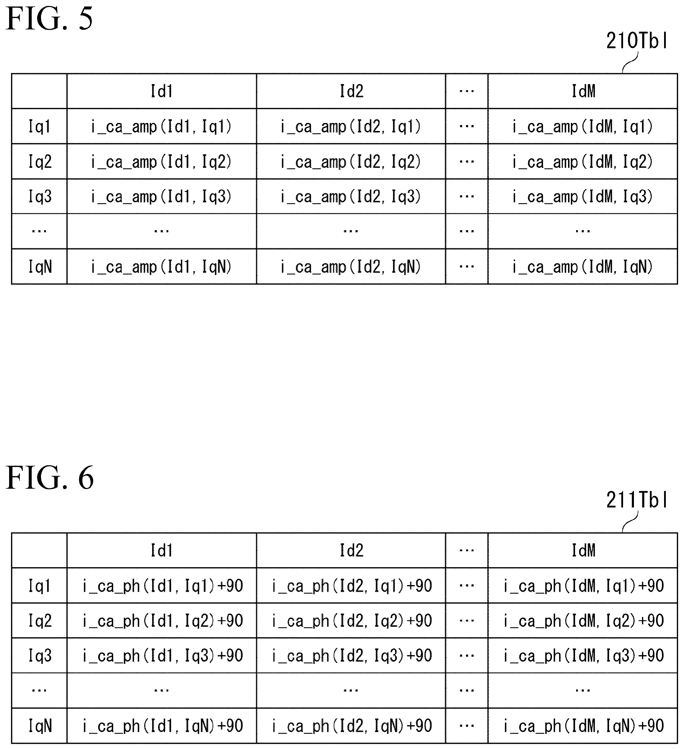

The torque suppression command amplitude calculator 210 calculates an amplitude i_ca_amp, which is an amplitude value of the torque pulsation suppression command values i_cancel and i_cancel2, based on the current command values id_ref and iq_ref. A method for the torque suppression command amplitude calculator 210 to calculate the amplitude i_ca_amp will be described with reference to FIGS. 3 to 6. FIGS. 3 and 4 are diagrams showing an example of a torque pulsation waveform according to Embodiment 1. FIG. 5 is a diagram showing an example of an amplitude table for suppressing torque pulsation according to Embodiment 1. FIG. 6 is a diagram showing an example of a phase table for suppressing torque pulsation according to Embodiment 1.

An upper part of FIG. 3 shows an example of a torque pulsation waveform including a sixth-order frequency component in terms of electrical angle extracted from a torque measured when a sinusoidal current is applied to the motor and the motor 1 is driven under a specific current condition. The current condition of the motor 1 here is such that the motor current Id on the d-axis of the motor 1 is set to a constant value Id1, the motor current Iq on the q-axis is set to a constant value Iq1, and the rotational angular velocity of the motor 1 is constant.

In the present specification and the drawings, the current condition when the motor 1 is driven with the motor current Id = Id# and the motor current Iq = Iq# may be referred to as a current condition (Id#, Iq#). # is a numerical value for identifying the current value. For example, the current condition when the motor 1 is driven with the current Id = Id1 and the current Iq = Iq1 is referred to as a current condition (Id1, Iq1).

The current command value id_ref on the d-axis may be used as the motor current Id. In addition, the current command value iq_ref on the q-axis may be used as the motor current Iq.

A middle part of FIG. 3 shows a waveform of the motor current for suppressing the torque pulsation, which is a value obtained by multiplying the torque pulsation waveform shown in the upper part by "-1/Kt".

A lower part of FIG. 3 shows an example in which the waveform of the motor current shown in the middle part is formulated to extract an amplitude and an initial phase of the waveform. An amplitude value of the motor current for suppressing the torque pulsation under the current condition (Id1, Iq1) is an amplitude i_ca_amp (1d1, Iq1). An initial phase value of the motor current for suppressing the torque pulsation under the current condition (Id1, Iq1) is a phase i_ca_ph (Id1, Iq1).

An upper part of FIG. 4 shows an example of a torque pulsation waveform, which is a sixth-order frequency component in terms of electrical angle extracted from a torque of the motor 1 driven under a current condition different from that of FIG. 3. The current condition of the motor 1 here is a current condition (Id2, Iq1), and is such that the motor current Id on the d-axis of the motor 1 is set to a constant value 1d2, Iq on the q-axis is set to a constant value Iq1, and the rotational angular velocity of the motor 1 is constant.

A middle part of FIG. 4 shows a waveform of the motor current for suppressing the torque pulsation, which is a value obtained by multiplying the torque pulsation waveform shown in the upper part by "-1/Kt".

A lower part of FIG. 4 shows an example in which the waveform of the motor current shown in the middle part is formulated to extract an amplitude and an initial phase of the waveform. An amplitude value of the motor current for suppressing the torque pulsation under the current condition (Id2, Iq1) is an amplitude i_ca_amp (Id2, Iq1). An initial phase value of the motor current for suppressing the torque pulsation under the current condition (Id2, Iq1) is a phase i_ca_ph (Id2, Iq1).

FIG. 5 shows an example of a torque suppression amplitude table 210Tbl. The torque suppression amplitude table 210Tbl is a table showing a correspondence relationship between the current condition and the amplitude value of the motor current for suppressing the torque pulsation. For example, in the same manner as the method described in FIGS. 3 and 4, the amplitude value of the motor current for suppressing the torque pulsation is calculated in advance under various current conditions in which the current is assumed to be applied to the motor 1, and the calculated amplitude value is stored in the torque suppression amplitude table 210Tbl.

When the motor 1 is rotated, the current command values id_ref and iq_ref are input to the torque suppression command amplitude calculator 210. The torque suppression command amplitude calculator 210 refers to the torque suppression amplitude table 210Tbl based on the input current command values id_ref and iq_ref, and acquires an amplitude i_ca_amp (id_ref, iq_ref) corresponding to a current condition (id_ref, iq_ref). The torque suppression command amplitude calculator 210 outputs the acquired amplitude i_ca_amp (id_ref, iq_ref) as the amplitude i_ca_amp of the current command value for suppressing the torque pulsation in the motor 1.

Here, the torque suppression command amplitude calculator 210 may calculate the amplitude i_ca_amp by performing linear interpolation. The torque suppression command amplitude calculator 210 calculates the amplitude i_ca_amp using linear interpolation, for example, in a case where the current command value iq_ref under the current condition for which the amplitude is to be calculated is a current value that is midway between the motor currents Iq1 and Iq2 in the torque suppression amplitude table 210Tbl. For example, the amplitude value in a current condition (IdM, Iq1) located between the current condition (Id1, Iq1) in FIG. 3 and the current condition (Id2, Iq1) in FIG. 4 may be calculated by linear interpolation. Here, IdM is, for example, (Id1 + Id2)/2. In this case, the torque suppression command amplitude calculator 210 calculates, for example, a value obtained by adding the amplitude i_ca_amp (Id1, Iq1) and the amplitude i_ca_amp (Id2, Iq1) and multiplying the sum by 1/2, as the amplitude i_ca_amp (IdM, Iq1).

FIG. 6 shows an example of a torque suppression phase table 211Tbl. The torque suppression phase table 211Tbl is a table showing a correspondence relationship between the current condition and the amplitude value of the motor current for suppressing the torque pulsation. For example, in the same manner as the method described in FIGS. 3 and 4, the initial phase of the motor current for suppressing the torque pulsation is calculated in advance under various current conditions in which the current is assumed to be applied to the motor 1, and a phase obtained by advancing the calculated initial phase by 90 degrees is stored in the torque suppression phase table 211Tb1.

For example, in a case where the initial phase under the current condition (Id1, Iq1) is a phase i_ca_ph (Id1, Iq1), a phase {i_ca_ph (Id1, Iq1) + 90}, which is a phase advanced by 90 degrees by adding 90 to the phase i_ca_ph (Id1, Iq1), is stored in the torque suppression phase table 211Tbl. In addition, in a case where the initial phase under the current condition (Id2, Iq1) is a phase i_ca_ph (Id2, Iq1), a phase {i_ca_ph (Id2, Iq1) + 90} is stored in the torque suppression phase table 211Tbl.

When the motor 1 is rotated, the current command values id_ref and iq_ref are input to the torque suppression command phase calculator 211. The torque suppression command phase calculator 211 refers to the torque suppression phase table 211Tbl based on the current command values id_ref and iq_ref, and acquires an initial phase {i_ca_ph (id_ref, iq_ref) + 90} corresponding to a current condition (id_ref, iq_ref).

The torque suppression command phase calculator 211 outputs the acquired phase {i_ca_ph (id_ref, iq_ref) + 90} as an initial phase i_ca_phase of the current command value for suppressing the torque pulsation in the motor 1 under the current condition (id_ref, iq_ref). That is, there is a relationship of i_ca_phase = i_ca_ph + 90.

Here, the torque suppression phase table 211Tbl stores a phase obtained by advancing the phase i_ca_ph by 90 degrees. This is for the purpose of applying a motor current corresponding to the torque pulsation suppression command value i_cancel2 to the motor 1. More specifically, the cancellation voltage command value vq_cancel including a component of the torque pulsation suppression command value i_cancel2 is added to the fundamental wave command value vq. Therefore, the phase of the torque pulsation suppression command value i_cancel2 is advanced by 90 degrees. Here, 90 degrees is a phase corresponding to 1/4 of a period in a case where one period in a waveform of an Nth-order frequency component in terms of electrical angle to be suppressed is set to 360 degrees.

The torque suppression command value calculator 21 calculates the torque pulsation suppression command values i_cancel and i_cancel2 shown in Equations (1-3) and (1-4). The constant N is the order to be suppressed. θ is a rotor position θ determined by the rotation position determination unit 2.

$$i\_cancel = i\_ca\_amp \times \cos(N\theta + i\_ca\_phase) \ ...\ \text{Equation (1-3)}$$

$$i\_cancel2 = i\_ca\_amp \times \cos(N\theta + i\_ca\_phase - 90) \ ...\ \text{Equation (1-4)}$$

Here, a process of deriving the torque pulsation suppression command value i_cancel shown in Equation (1-3) will be specifically described.

The adder 212 adds the phase i_ca_phase calculated by the torque suppression command phase calculator 211 to a value (Nθ) obtained by multiplying the rotor position θ by the constant N. Here, the value (Nθ) obtained by multiplying the rotor position θ by the constant N is calculated by the amplifier 28 described below and is output to the adder 212. The adder 212 outputs a phase after the addition (Nθ + i_ca_phase) to the cosine calculator 213.

The cosine calculator 213 calculates a sine wave cos(Nθ + i_ca_phase) having the phase (Nθ + i_ca_phase) output from the adder 212, and outputs the calculated sine wave cos(Nθ + i_ca_phase) to the multiplier 214.

The multiplier 214 multiplies the sine wave cos(Nθ + i_ca_phase) output from the cosine calculator 213 by the amplitude i_ca_amp. The multiplier 214 outputs the sine wave {i_ca_amp × cos(Nθ + i_ca_phase)} after the multiplication as a cancellation voltage command value i_cancel.

Here, a process of deriving the torque pulsation suppression command value i_cancel2 shown in Equation (1-4) will be specifically described.

The subtractor 215 subtracts 90 from the phase (Nθ + i_ca_phase) output from the adder 212 to output a phase (Nθ + i_ca_phase - 90) to the cosine calculator 216.

The cosine calculator 216 calculates a sine wave cos(Nθ + i_ca_phase - 90) having the phase (Nθ + i_ca_phase - 90) output from the adder 212, and outputs the calculated sine wave cos(Nθ + i_ca_phase - 90) to the multiplier 217.

The multiplier 217 multiplies the sine wave cos(Nθ + i_ca_phase - 90) output from the cosine calculator 216 by the amplitude i_ca_amp. The multiplier 217 outputs the sine wave {i_ca_amp × cos(Nθ + i_ca_phase - 90)} after the multiplication as a cancellation voltage command value i_cancel2.

Here, as described above, the phase i_ca_phase is obtained by advancing the phase i_ca_ph by 90 degrees, and there is a relationship of i_ca_phase = i_ca_ph + 90, so that Equation (1-4) is equivalent to Equation (1-5).

$$\text{i\_cancel2} = \text{i\_ca\_amp} \times \cos(N\theta + \text{i\_ca\_ph}) \text{ ... Equation (1-5)}$$

The torque pulsation suppression command value i_cancel2 calculated by the cancellation calculator 20 corresponds to the motor currents shown in the middle and lower parts of FIG. 3 and the middle and lower parts of FIG. 4. That is, the torque pulsation suppression command value i_cancel2 is a current command value corresponding to a sine wave that is in an opposite phase to the torque pulsation in the motor 1 and whose amplitude is 1/Kt times the torque pulsation. **In** addition, the torque pulsation suppression command value i_cancel is a current command value corresponding to a sine wave advanced by 90 degrees in phase with respect to the torque pulsation suppression command value i_cancel2.

The cancellation calculator 20 outputs the torque pulsation suppression command value i_cancel out of the torque pulsation suppression command values i_cancel and i_cancel2 to the adder 15. The adder 15 adds the torque pulsation suppression command value i_cancel to the current command value iq_ref, and outputs a current command value iq_ref2 after the addition to the current controller 9. Here, it is assumed that a set response frequency in the q-axis current controller 93 is a frequency fq.

In this case, in a case where the Nth-order frequency in terms of electrical angle is equal to or lower than the frequency fq, the Nth-order frequency component in terms of electrical angle in the motor current Iq matches the torque pulsation suppression command value i_cancel2. The torque pulsation suppression command value i_cancel2 is a sine wave that is in an opposite phase to the torque pulsation in the motor 1 and whose amplitude is 1/Kt times the torque pulsation, which is shown in the middle and lower parts of FIG. 3 or the middle and lower parts of FIG. 4. Therefore, since the torque pulsation shown in the upper part of FIG. 3 or the upper part of FIG. 4 can be canceled, it is possible to suppress the torque pulsation in the motor 1.

On the other hand, in a case where the Nth-order frequency in terms of electrical angle exceeds the frequency fq, it exceeds the performance range of the q-axis current controller 93. The cancellation voltage command value vq_cancel is used to perform control such that the Nth-order frequency component in terms of electrical angle included in the motor current Iq matches the torque pulsation suppression command value i_cancel2 in a band where the Nth-order frequency in terms of electrical angle exceeds the frequency fq.

The disturbance suppression command value calculator 22 calculates a disturbance suppression command value i_gairan based on the current command values id_ref and iq_ref and the rotor position θ. The disturbance suppression command value i_gairan is a current command value for suppressing a disturbance.

The disturbance suppression command value calculator 22 includes a disturbance suppression command amplitude calculator 220, a disturbance suppression command phase calculator 221, an adder 222, a cosine calculator 223, and a multiplier 224.

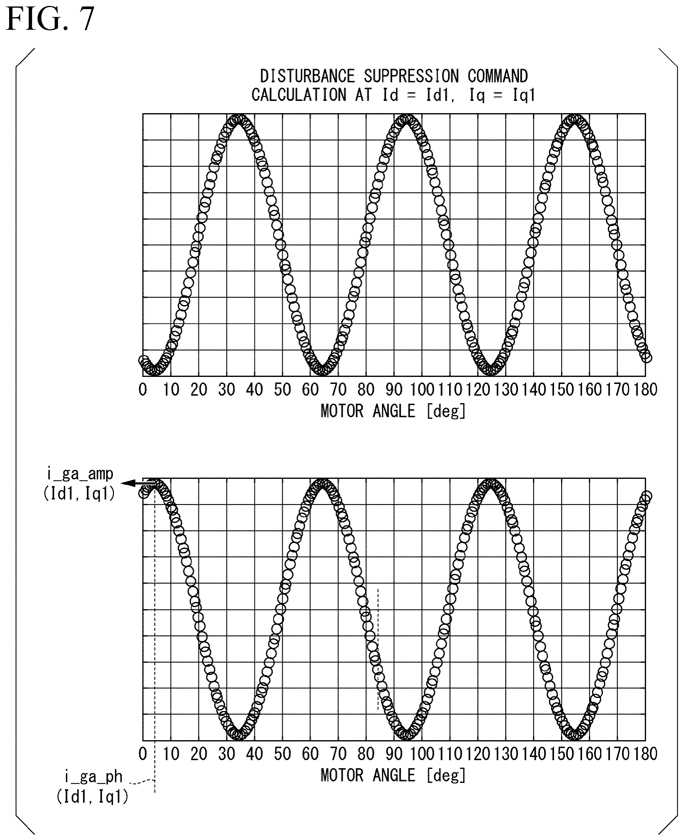

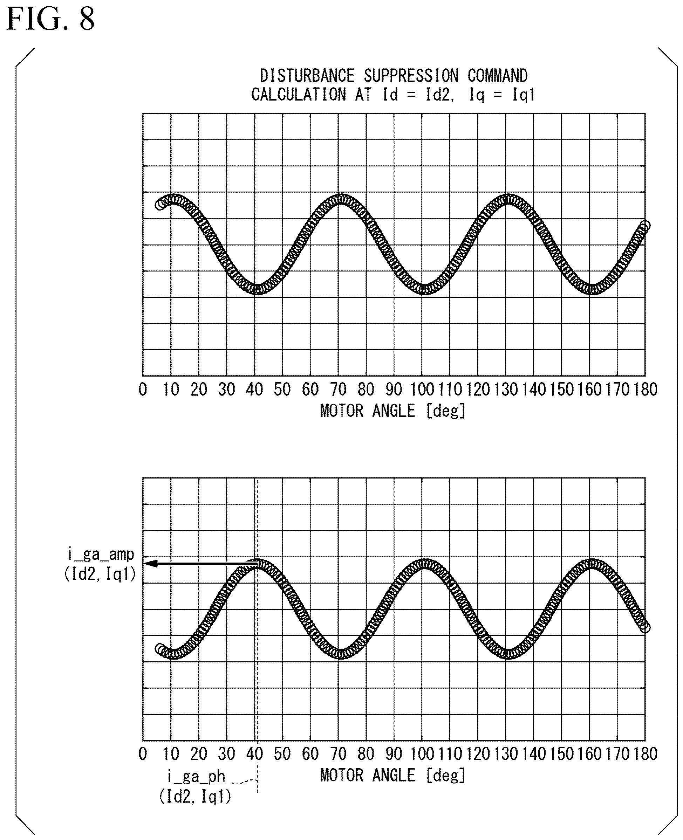

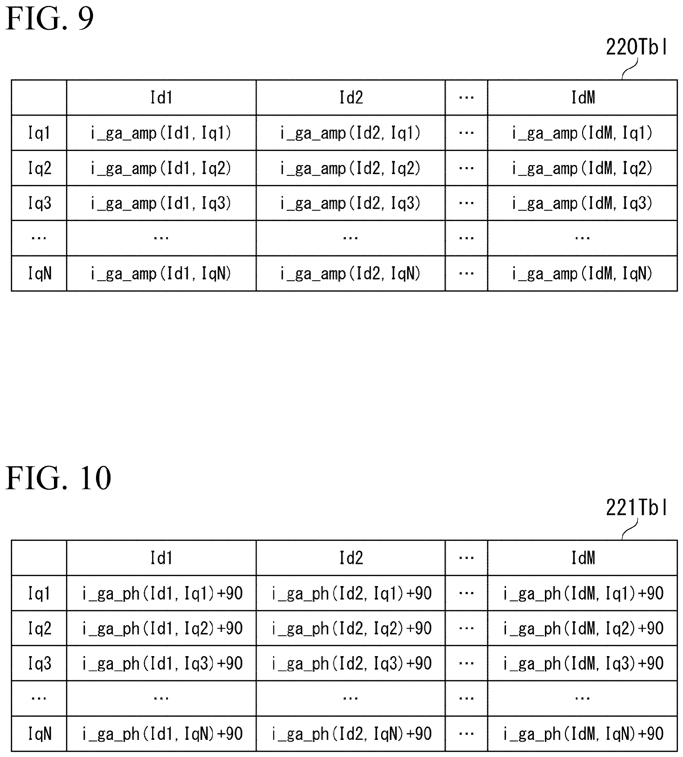

The disturbance suppression command amplitude calculator 220 calculates an amplitude i_ga_amp, which is an amplitude value of the disturbance suppression command value i_gairan, based on the current command values id_ref and iq_ref. A method for the disturbance suppression command amplitude calculator 220 to calculate the amplitude i_ga_amp will be described with reference to FIGS. 7 to 10. FIGS. 7 and 8 are diagrams showing an example of a waveform affected by a disturbance according to Embodiment 1. FIG. 9 is a diagram showing an example of an amplitude table for suppressing an influence of a disturbance according to Embodiment 1. FIG. 10 is a diagram showing an example of a phase table for suppressing an influence of a disturbance according to Embodiment 1.

An upper part of FIG. 7 shows an example of a waveform affected by a disturbance, which includes a sixth-order frequency component in terms of electrical angle extracted from the motor current Iq on the q-axis when the motor 1 is driven under a specific current condition. The current condition of the motor 1 here is such that the motor current Id on the d-axis of the motor 1 is set to a constant value Id1, the motor current Iq on the q-axis is set to a constant value Iq1, the rotational angular velocity of the motor 1 is constant, and the fundamental wave command values vd and vq are constant. In addition, the influence of the disturbance here includes a sixth-order frequency component in terms of electrical angle of a magnetic flux φm of a magnet in the motor 1, a sixth-order frequency component in terms of electrical angle of the inductance in the motor 1, and the like. These are sixth-order frequency components in terms of electrical angle caused by the fluctuation and distortion of the impedance in the motor 1, that is, the disturbance.

A lower part of FIG. 7 shows an example of a waveform in which a sign of the waveform shown in the upper part of FIG. 7 is inverted. In addition, the lower part of FIG. 7 shows an example in which the waveform is formulated to extract an amplitude and an initial phase of the waveform. An amplitude value of the motor current for suppressing the disturbance under the current condition (Id1, Iq1) is an amplitude i_ga_amp (Id1, Iq1). An initial phase value of the motor current for suppressing the influence of the disturbance under the current condition (Id1, Iq1) is a phase i_ga_ph (Id1, Iq1).

An upper part of FIG. 8 shows an example of a waveform affected by a disturbance, which includes a sixth-order frequency component in terms of electrical angle extracted from the motor current Iq on the q-axis when the motor 1 is driven under a current condition (Id2, Iq1) different from that of FIG. 7.

A lower part of FIG. 8 shows an example of a waveform in which a sign of the waveform shown in the upper part of FIG. 8 is inverted. In addition, the lower part of FIG. 8 shows an example in which the waveform is formulated to extract an amplitude and an initial phase of the waveform. An amplitude value of the motor current for suppressing the disturbance under the current condition (1d2, Iq1) is an amplitude i_ga_amp (Id2, Iq1). An initial phase value of the motor current for suppressing the influence of the disturbance under the current condition (Id2, Iq1) is a phase i_ga_ph (Id2, Iq1).

FIG. 9 shows an example of a disturbance suppression amplitude table 220Tbl. The disturbance suppression amplitude table 220Tbl is a table showing a correspondence relationship between the current condition and the amplitude value of the motor current for suppressing the influence of the disturbance. For example, in the same manner as the method described in FIGS. 7 and 8, the amplitude value of the motor current for suppressing the disturbance pulsation is calculated in advance under various current conditions in which the current is assumed to be applied to the motor 1, and the calculated amplitude value is stored in the disturbance suppression amplitude table 220Tbl.

When the motor 1 is rotated, the current command values id_ref and iq_ref are input to the disturbance suppression command amplitude calculator 220. The disturbance suppression command amplitude calculator 220 refers to the disturbance suppression amplitude table 220Tbl based on the input current command values id_ref and iq_ref, and acquires an amplitude i_ga_amp (id_ref, iq_ref) corresponding to a current condition (id_ref, iq_ref). The disturbance suppression command amplitude calculator 220 outputs the acquired amplitude i_ga_amp (id_ref, iq_ref) as the amplitude i_ga_amp of the current command value for suppressing the influence of the disturbance in the motor 1.

Here, the disturbance suppression command amplitude calculator 220 may calculate the amplitude i_ga_amp by performing linear interpolation. The disturbance suppression command amplitude calculator 220 calculates the amplitude i_ga_amp using linear interpolation, for example, in a case where the current command value iq_ref under the current condition for which the amplitude is to be calculated is a current value that is midway between the motor currents Iq1 and Iq2 in the disturbance suppression amplitude table 220Tbl. For example, the amplitude value under a current condition (IdM, Iq1) located between the current condition (Id1, Iq1) in FIG. 7 and the current condition (Id2, Iq1) in FIG. 8 may be calculated by linear interpolation. Here, IdM is, for example, (Id1 + Id2)/2. In this case, the disturbance suppression command amplitude calculator 220 calculates, for example, a value obtained by adding the amplitude i_ga_amp (Id1, Iq1) and the amplitude i_ga_amp (Id2, Iq1) and multiplying the sum by 1/2, as the amplitude i_ga_amp (IdM, Iq1).

FIG. 10 shows an example of a disturbance suppression phase table 221Tbl. The disturbance suppression phase table 221Tbl is a table showing a correspondence relationship between the current condition and the amplitude value of the motor current for suppressing the torque pulsation. For example, in the same manner as the method described in FIGS. 7 and 8, the initial phase of the motor current for suppressing the influence of the disturbance is calculated in advance under various current conditions in which the current is assumed to be applied to the motor 1, and a phase obtained by advancing the calculated initial phase by 90 degrees is stored in the disturbance suppression phase table 221Tbl.

For example, in a case where the initial phase under the current condition (Id1, Iq1) is a phase i_ga_ph (Id1, Iq1), a phase {i_ga_ph (Id1, Iq1) + 90} is stored in the disturbance suppression phase table 221Tbl. In a case where the initial phase under the current condition (1d2, Iq1) is a phase i_ga_ph (Id2, Iq1), a phase {i_ga_ph (Id2, Iq1) + 90} is stored in the disturbance suppression phase table 221Tbl.

When the motor 1 is rotated, the current command values id_ref and iq_ref are input to the disturbance suppression command phase calculator 221. The disturbance suppression command phase calculator 221 refers to the disturbance suppression phase table 221Tbl based on the current command values id_ref and iq_ref, and acquires an initial phase {i_ga_ph (id_ref, iq_ref) + 90} corresponding to a current condition (id_ref, iq_ref).

The disturbance suppression command phase calculator 221 outputs the acquired phase {i_ga_ph (id_ref, iq_ref) + 90} as an initial phase i_ga_phase of the current command value for suppressing the influence of the disturbance in the motor 1 under the current condition (id_ref, iq_ref). That is, there is a relationship of i_ga_phase = i_ga_ph + 90.

Here, the disturbance suppression phase table 221Tbl stores a phase obtained by advancing the phase i_ga_ph by 90 degrees. This is for the purpose of applying a motor current corresponding to the disturbance suppression command value i_gairan to the motor 1. More specifically, the cancellation voltage command value vq_cancel including a component of the disturbance suppression command value i_gairan is added to the fundamental wave command value vq. Therefore, the phase of the disturbance suppression command value i_gairan is advanced by 90 degrees.

The disturbance suppression command value calculator 22 calculates the disturbance suppression command value i_gairan shown in Equation (1-6). The constant N is the order to be suppressed. $\theta$ is a rotor position $\theta$ determined by the rotation position determination unit 2.

$$i\_gairan = i\_ga\_amp \times \cos(N\theta + i\_ga\_phase) \ ... \ \text{Equation (1-6)}$$

Here, a process of deriving the disturbance suppression command value i_gairan shown in Equation (1-6) will be specifically described.

The adder 222 adds the phase i_ga_phase calculated by the disturbance suppression command phase calculator 221 to a value (N$\theta$) obtained by multiplying the rotor position $\theta$ by the constant N. The adder 2212 outputs a phase after the addition (N$\theta$ + i_ga_phase) to the cosine calculator 223.

The cosine calculator 223 calculates a sine wave cos(N$\theta$ + i_ga_phase) having the phase (N$\theta$ + i_ga_phase) output from the adder 222, and outputs the calculated sine wave cos(N$\theta$ + i_ga_phase) to the multiplier 224.

The multiplier 224 multiplies the sine wave cos(N$\theta$ + i_ga_phase) output from the cosine calculator 223 by the amplitude i_ga_amp. The multiplier 224 outputs the sine wave {i_ga_amp × cos(N$\theta$ + i_ga_phase)} after the multiplication as the disturbance suppression command value i_gairan.

**In** the cancellation calculator 20, composite values i_sum and v_sum shown in Equations (1-7), (1-8), and (1-9) are calculated. The constant N is the order to be suppressed. $\omega$ is the rotational angular velocity $\omega$ determined by the speed calculator 12. The constant L is the inductance of the motor 1. The constant R is a resistance value of a winding resistance of the motor 1.

$$i\_sum = i\_cancel + i\_gairan \ ... \ \text{Equation (1-7)}$$

$$v\_sum = N \cdot \omega \cdot L \cdot i\_sum$$

$$= N \cdot \omega \cdot L \cdot (i\_cancel + i\_gairan) \ ... \ \text{Equation (1-8)}$$

$$v\_sum2 = v\_sum + R \cdot i\_cancel2$$

$$= R \cdot i\_cancel2 + N \cdot \omega \cdot L \cdot (i\_cancel + i\_gairan) \ ... \ \text{Equation (1-9)}$$

A process of deriving the composite value i_sum shown in Equation (1-7) will be specifically described. The adder 23 adds the disturbance suppression command value i_gairan to the torque pulsation suppression command value i_cancel, and outputs a composite value i_sum (= i_cancel + i_gairan) after the addition to the multiplier 24.

A process of deriving the composite value v_sum shown in Equation (1-8) will be specifically described. The multiplier 24 multiplies the composite value i_sum output from the adder 23 by the value (N$\omega$L) output from the amplifier 17, and outputs a composite value v_sum (= N·$\omega$·L·i_sum) after the multiplication to the adder 25.

A process of deriving the composite value v_sum2 shown in Equation (1-9) will be specifically described. The amplifier 27 outputs a value obtained by multiplying the torque pulsation suppression command value i_cancel by R to the adder 25. The adder 25 adds the value (R·i_cancel) output from the amplifier 27 to the composite value v_sum, and outputs a composite value v_sum2 after the addition to the limiter 26.

The limiter 26 compares the composite value v_sum2 output from the adder 25 with an upper limit value (+vq_clip) and a lower limit value (-vq_clip), limits the composite value v_sum2 to a value between the lower limit value and the upper limit value based on a comparison result, and outputs a value after the limitation as the cancellation voltage command value vq_cancel. Specifically, the limiter 26 limits the composite value v_sum2 to a value between the lower limit value and the upper limit value by using Equation (1-10).

In a case of (v_sum2 < -vq_clip),

$$\rightarrow vq\_cancel = -vq\_clip$$

**In** a case of (-vq_clip < v_sum2 < vq_clip),

$$\rightarrow vq\_cancel = v\_sum2$$

In a case of (vq_clip < v_sum2),

$$\rightarrow vq\_cancel = vq\_clip \ ... \ \text{Equation } (1\text{-}10)$$

Here, the limit value vq_clip set as the upper limit value and the lower limit value will be described. The limit value vq_clip is calculated as shown in Equation (1-11) using the order N of the electrical angle to be suppressed, the maximum rotational angular velocity ωmax at the rotational angular velocity ω used for the calculation in the cancellation calculator 20, the inductance L of the motor 1, and the maximum composite value i_sum_max at the composite value i_sum.

$$vq\_clip = N \cdot \omega max \cdot L \cdot i\_sum\_max \ ... \ \text{Equation } (1\text{-}11)$$

Alternatively, the rotational angular velocity ω of the motor 1 may be input to the limiter 26, and the limit value vq_clip may be calculated using an Equation in which the maximum rotational angular velocity ωmax in Equation (1-11) is replaced with the rotational angular velocity ω.

In addition, when Equation (1-9) is taken into consideration in Equation (1-10), the following equation (1-12) is obtained.

In a case of (v_sum2 < -vq_clip),

$$\rightarrow vq\_cancel = -vq\_clip$$

In a case of (-vq_clip < v_sum2 < vq_clip),

$$\rightarrow vq\_cancel = R \cdot i\_cancel2 + N \cdot \omega \cdot L \cdot (i\_cancel + i\_gairan)$$

In a case of (vq_clip < v_sum2),

$$\rightarrow vq\_cancel = vq\_clip \ ... \ \text{Equation } (1\text{-}12)$$

As shown in Equation (1-12), the limiter 26 limits a composite value v_sum2 including a value obtained by multiplying an added value of the disturbance suppression command value i_gairan and the torque pulsation suppression command value i_cancel by a coefficient including the rotational angular velocity ω of the motor, to the limit value vq_clip. Here, the limit value vq_clip is a value calculated based on the rotational angular velocity ω of the motor 1 and the inductance L which is an electrical constant. That is, the cancellation voltage command value vq_cacel is calculated based on the sum of the "disturbance suppression command value and torque pulsation suppression command value" after the limitation.

The coordinate transformation device 10 outputs the cancellation voltage command value vq_cancel to the adder 14. The adder 14 adds the cancellation voltage command value vq_cancel to the fundamental wave command value vq, and outputs a fundamental wave command value vq' after the addition to the coordinate transformation device 10.

Here, the effects of the motor control device 100 according to Embodiment 1 will be described. A voltage equation related to the q-axis in the motor 1 is represented by the following equation (1-13). R is a resistance value of a winding resistance in the motor 1. L is the inductance in the motor 1. φ is the flux linkage in the motor 1. s is a Laplace operator. Vq is a q-axis motor voltage. iq is a q-axis motor current. id is a d-axis motor current.

$$Vq = R \cdot iq + sL \cdot iq + \omega(L \cdot id + \varphi) \ ... \ \text{Equation } (1\text{-}13)$$

Here, in Equation (1-13), it is assumed that the motor current id = 0 (zero) and there is no pulsating component in the flux linkage φ. In this case, it is assumed that the inductance L includes a sixth-order frequency component L_6f in terms of electrical angle in the inductance L, in addition to L_dc which is a DC component. In this case, L can be represented by L_dc + L_6f, and Equation (1-13) can be represented by the following equation (1-14).

$$Vq = R \cdot iq + s(L\_dc + L\_6f) \cdot iq + \omega\varphi \ ... \ \text{Equation } (1\text{-}14)$$

In Equation (1-14), a situation in which the motor 1 is rotating at a high speed is considered. In this case, a first term on a right side of Equation (1-14) can be ignored because it is relatively small compared to a second term on the right side. **In** addition, in a case where the motor 1 is rotating at a high speed, the sixth-order frequency component in terms of electrical angle with respect to the high-speed rotation is larger than the response frequency in the q-axis current controller 93, and the operation amount by the q-axis current controller 93 corresponds to the d-axis motor voltage Vq, a sixth-order frequency component Vq_6f in terms of electrical angle included in the d-axis motor voltage Vq is sufficiently small and can be regarded as 0 (zero). **In** consideration of the above-described points, Equation (1-14) can be represented by the following equation (1-15). iq_dc is a DC component included in the q-axis motor current iq. iq_6f is a sixth-order frequency component in terms of electrical angle included in the q-axis motor current iq. That is, iq = iq_dc + iq_6f.

$$Vq\_6f \approx 0$$

$$\approx s(L\_dc + L\_6f) \cdot (iq\_dc + iq\_6f) \ ... \ \text{Equation (1-15)}$$

When Equation (1-15) is solved for the sixth-order frequency component iq_6f in terms of electrical angle included in the q-axis motor current iq, Equation (1-16) is obtained.

$$iq\_6f = -L\_6f/L\_dc \cdot iq\_dc \ ... \ \text{Equation (1-16)}$$

In Equation (1-16), the presence of L_6f causes the sixth-order frequency component iq_6f in terms of electrical angle included in the q-axis motor current iq. Here, in a case where the sixth-order frequency component in terms of electrical angle is smaller than the response frequency in the q-axis current controller 93, feedback control is executed such that the frequency component iq_6f is 0 (zero), and the frequency component iq_6f approaches 0 (zero). That is, the sixth-order frequency component Vq_6f in terms of electrical angle in the d-axis motor voltage Vq is generated to suppress the frequency component iq_6f.

On the other hand, in a case where this magnitude relationship is inverted and the sixth-order frequency component in terms of electrical angle is larger than the response frequency in the q-axis current controller 93, the frequency component iq_6f cannot be suppressed in the feedback control through the q-axis current controller 93. Therefore, the frequency component iq_6f according to Equation (1-16) is applied to the motor 1.

As described above, in a case where the frequency of the frequency component iq_6f exceeds a control band in the current controller 9 because of the fluctuation of the impedance in the motor 1, the frequency component iq_6f shown in Equation (1-16) is reflected in the rotation of the motor 1. **In** the present embodiment, the q-axis motor current including such a frequency component iq_6f is defined as a disturbance current due to impedance distortion. The q-axis motor current including the frequency component iq_6f may be referred to as a disturbance current iq_6f. Measurement results of the disturbance current iq_6f are as shown in the upper part of each of FIGS. 7 and 8.

Based on such a concept, in the present embodiment, the disturbance suppression command value calculator 22 generates the disturbance suppression amplitude table 220Tbl and the disturbance suppression phase table 221Tbl in advance. The disturbance suppression command value calculator 22 calculates the amplitude and the phase of the waveform in which the disturbance current is inverted, as shown in the lower part of each of FIGS. 7 and 8. As shown in FIG. 9, the disturbance suppression command value calculator 22 creates a table in which the amplitude value itself is mapped as the disturbance suppression amplitude table 220Tbl for the amplitude. In addition, as shown in FIG. 10, the disturbance suppression command value calculator 22 creates a table in which a phase advanced by 90 degrees from the initial phase is mapped for the phase as the disturbance suppression phase table 221Tbl. The disturbance suppression command value calculator 22 calculates the disturbance suppression command value i_gairan by referring to the disturbance suppression amplitude table 220Tbl and the disturbance suppression phase table 221Tbl based on the current command values id_ref and iq_ref. In the cancellation calculator 20, the amplitude of the composite value i_sum including the disturbance suppression command value i_gairan is multiplied by NωL. In the cancellation voltage command value vq_cancel, an item vq_cancel_d caused by the disturbance suppression command value i_gairan is represented by the following equation (1-17).

$$vq\_cancel\_d = N \cdot \omega \cdot L \cdot i\_gairan \ ... \ \text{Equation (1-17)}$$

On the other hand, a voltage Vgairan required to cancel the disturbance current iq_6f represented by Equation (1-16) will be described. The impedance Z(N) in the motor 1 with respect to the Nth-order frequency component in terms of electrical angle is represented by the following equation (1-18). j is a pure imaginary number, and has a relationship of j × j = -1. The constant N is the order to be suppressed. The constant L is the inductance of the motor 1. ω is the rotational angular velocity of the motor 1. R is a resistance value of a winding resistance of the motor 1.

$$Z(N) = R + j \cdot N\omega L \ ... \ \text{Equation (1-18)}$$

In addition, the voltage Vgairan required to cancel the disturbance current iq_6f is represented by the following equation (1-19). Z(N) is the impedance represented by Equation (1-18). iq_6f is a disturbance current.

$$Vgairan = Z(N) \cdot (-iq\_6f)$$

$$= (R + j \cdot N\omega L) \cdot iq\_6f$$

$$\approx j \cdot N\omega L \cdot (-iq\_6f) \ ... \ \text{Equation (1-19)}$$

In Equation (1-19), the term for the resistance value R is omitted in the equation shown after "≈". This is because the influence of the resistance value R of the winding resistance in the motor 1 is sufficiently small as compared with NωL and can be ignored in a region where the sixth-order frequency component in terms of electrical angle included in the q-axis motor current iq is sufficiently higher than the response frequency in the q-axis current controller 93.

In Equation (1-19), the voltage required to suppress the disturbance current iq_6f is obtained by advancing the phase by 90 degrees and multiplying the amplitude by NωL with respect to a current (-iq_6f) obtained by inverting the sign of the disturbance current iq_6f. Here, the reason why the phase is advanced by 90 degrees is that the pure imaginary number j is considered to be a shift operator that shifts the phase by 90 degrees. In consideration of this, when Equation (1-17) and Equation (1-19) are compared with each other, the disturbance suppression command value i_gairan is obtained by advancing the phase by 90 degrees with respect to the value obtained by inverting the sign of the disturbance current iq_6f. Therefore, the disturbance suppression command value i_gairan corresponds to the term of "j ·(-iq_6f)" in Equation (1-19). Therefore, it can be said that Equation (1-17) and Equation (1-19) are equivalent.

Therefore, in the present embodiment, by including Equation (1-17), which has a term including the disturbance suppression command value i_gairan calculated by the disturbance suppression command value calculator 22, in Equation (1-12) for the cancellation voltage command value vq_cancel, it is possible to suppress the influence of the disturbance current iq_6f.

Subsequently, the effects of the torque pulsation suppression command values i_cancel and i_cancel2 output from the torque suppression command value calculator 21 will be described. A torque equation in the motor 1 is represented by the following equation (1-20). Kt is a torque constant. T is a torque. iq is a q-axis motor current.

$$T = Kt \cdot iq \ ... \ \text{Equation (1-20)}$$

Note that, in Equation (1-20), an approximate torque T is shown assuming that a magnet torque is larger than a relaxant torque in the motor 1. In a case of a motor having a large ratio of the relaxant torque, the torque equation including the d-axis motor current id can be applied.

In Equation (1-20), it is assumed that the torque constant Kt includes a sixth-order frequency component Kt_6f in terms of electrical angle in addition to Kt_dc which is a DC component. In this case, Kt can be represented by Kt_dc + Kt_6f, and Equation (1-20) can be represented by the following equation (1-21).

$$T = Kt \cdot iq$$

$$= (Kt\_dc + Kt\_6f) \cdot iq$$

$$= (Kt\_dc \cdot iq + Kt\_6f \cdot iq \ ... \ \text{Equation (1-21)}$$

In Equation (1-21), in a case where the q-axis motor current iq is set to be constant, a first term on a right side of Equation (1-21) is a DC torque T_dc, and a second term on the right side is a pulsating torque T_6f that pulsates at the sixth-order electrical angle. When a DC component of the q-axis motor current iq is denoted by iq_dc, in a case where the q-axis motor current iq is constant, iq_dc = iq can be represented. In this case, the pulsating torque T_6f of the second term on the right side in Equation (1-21) can be represented by the following equation (1-22).

$$T\_6f = Kt\_6f \cdot iq\_dc \ ... \ \text{Equation (1-22)}$$

On the other hand, in a case where a current pulsation component iq_t6f that pulsates at the sixth-order electrical angle is added to the DC component iq_dc as the q-axis motor current iq, Equation (1-21) is represented by the following equation (1-23).

$$T = Kt \cdot iq$$

$$= (Kt\_dc + Kt\_6f) \cdot (iq\_dc + iq\_t6f)$$

$$\approx Kt\_dc \cdot iq\_dc + Kt\_6f \cdot iq\_dc + Kt\_dc \cdot iq\_t6f$$

$$\approx Kt\_dc \cdot iq + T\_6f + Kt\_dc \cdot iq\_t6f \ ... \ \text{Equation (1-23)}$$

Note that, in Equation (1-23), the term for Kt_6f·iq_t6f is omitted in the equation shown after "≈". This is because the product of the sixth-order frequency component Kt_6f in terms of electrical angle and the current pulsation component iq_t6f in the torque constant Kt is sufficiently small and can be ignored.

Here, a case where a second term on a right side of Equation (1-23), that is, the pulsating torque T_6f in Equation (1-22) is canceled by adding the current pulsation component iq_t6f, thereby making the torque T constant is considered. In this case, the condition has only to be met under which the sum of the second term on the right side and a third term on the right side in Equation (1-23) is 0. That is, the condition of T_6f + Kt_dc·iq_t6f= 0 has only to be met. When this is solved for the current pulsation component iq_t6f, the current pulsation component iq_t6f is represented by the following equation (1-24).

$$iq\_t6f = -T\_6f/Kt\_dc \ ... \ \text{Equation (1-24)}$$

As in Equation (1-24), in a case where the torque cancellation current iq_t6f, which is the sixth-order frequency component in terms of electrical angle in the q-axis motor current iq, can be set, the sixth-order frequency component in terms of electrical angle included in the torque T can be set to 0 (zero), making it possible to suppress the torque pulsation.

Based on such a concept, in the present embodiment, the torque suppression command value calculator 21 generates the torque suppression amplitude table 210Tbl and the torque suppression phase table 211Tbl. The torque suppression command value calculator 21 calculates the amplitude and the phase of the waveform obtained by inverting the waveform of the torque pulsation and multiplying the waveform by 1/Kt, as shown in the lower part of each of FIGS. 3 and 4. As shown in FIG. 5, the torque suppression command value calculator 21 creates a table in which the amplitude value itself is mapped as the torque suppression amplitude table 210Tbl for the amplitude. In addition, as shown in FIG. 6, the torque suppression command value calculator 21 creates a table in which a phase advanced by 90 degrees from the initial phase is mapped for the phase as the torque suppression phase table 211Tbl. The torque suppression command value calculator 21 calculates the disturbance suppression command value i_gairan by referring to the torque suppression amplitude table 210Tbl and the torque suppression phase table 211Tbl based on the current command values id_ref and iq_ref. In the cancellation calculator 20, the amplitude of the composite value i_sum including the torque pulsation suppression command value i_cancel is multiplied by NωL. In the cancellation voltage command value vq_cancel, an item vq_cancel_T caused by the torque pulsation suppression command values i_cancel and i_cancel2 is represented by the following equation (1-25).

$$vq\_cancel\_T = R \cdot i\_cancel2 + N \cdot \omega \cdot L \cdot i\_cancel \ ... \ \text{Equation (1-25)}$$

On the other hand, a voltage Vtorque required for applying the torque cancellation current iq_t6f as represented by Equation (1-24) will be described. The impedance Z(N) in the motor 1 with respect to the Nth-order frequency component in terms of electrical angle is represented by Equation (1-26) by using Equation (1-18). j is a pure imaginary number. The constant N is the order to be suppressed. The constant L is the inductance of the motor 1. ω is the rotational angular velocity of the motor 1. R is a resistance value of a winding resistance of the motor 1.

$$\text{Vtorque} = Z(N)\cdot iq\_t6f$$

$$= (R + j\cdot N\omega L)\cdot iq\_t6f$$

$$= R\cdot iq\_t6f + j\cdot N\omega L\cdot iq\_t6f \dots \text{Equation (1-26)}$$

Here, when a signal with a phase advanced by 90 degrees without changing the amplitude of the torque cancellation current iq_t6f is denoted by a current iq_t6f_90, Equation (1-26) can be represented by the following equation (1-27).

$$\text{Vtorque} = R\cdot iq\_t6f + j\cdot N\omega L\cdot iq\_t6f$$

$$= R\cdot iq\_t6f + N\omega L\cdot iq\_t6f\_90 \dots \text{Equation (1-27)}$$

When Equation (1-25) is compared with Equation (1-27), the torque cancellation current iq_t6 is equal to the torque pulsation suppression command value i_cancel2. In addition, the current iq_t6f_90 obtained by advancing the phase of the torque cancellation current iq_t6 by 90 degrees is equal to the torque pulsation suppression command value i_cancel. Therefore, it can be said that Equation (1-25) and Equation (1-27) are equivalent.

Therefore, in the present embodiment, by including Equation (1-25), which has a term including the torque pulsation suppression command values i_cancel and i_cancel2 calculated by the torque suppression command value calculator 21, in Equation (1-12) for the cancellation voltage command value vq_cancel, it is possible to make the sixth-order frequency component in terms of electrical angle included in the motor current match the cancellation current. Therefore, there is an effect of reducing a ripple component of the torque caused by the pulsation of the torque constant Kt in the motor 1.

Here, in FIG. 1, the adder 15 adds the torque pulsation suppression command value i_cancel2 to the current command value iq_ref. As a result, in a region where the frequency of the current command value iq_ref2 is smaller than the control band of the q-axis current controller 93, the q-axis motor current iq and iq_ref2 = iq_ref + i_cancel2 are matched by the q-axis current controller 93. On the other hand, in a region where the frequency of the current command value iq_ref2 is larger than the control band of the q-axis current controller 93, it is difficult for the q-axis current controller 93 to make the q-axis motor current iq match iq_ref2 = iq_ref + i_cancel2. In this case as well, the adder 14 adds the cancellation voltage command value vq_cancel to the fundamental wave command value vq. As a result, the fundamental wave command value vq can include the term of Equation (1-25). Therefore, the feedforward control works, and as a result, the q-axis motor current iq matches iq_ref2 = iq_ref + iq_cancel2. Therefore, the pulsation component of the torque is reduced.

In addition, in a case where R << NωL is established in a region where the sixth-order frequency component in terms of electrical angle is larger than the response frequency of the q-axis current controller 93 and the effect of the cancellation voltage command value vq_cancel is expected, it can be said that there is no significant difference in effect even in a case where the term "R·i_cancel2" in Equation (1-12) representing the cancellation voltage command value vq_cancel is omitted.

As described above, in Embodiment 1, the motor control device 100 includes the cancellation calculator 20. The cancellation calculator 20 calculates the cancellation voltage command value vq_cancel. The cancellation voltage command value is used for suppressing a disturbance current caused by the impedance distortion in the motor 1 and suppressing torque pulsation caused by the pulsation in a torque constant Kt in the motor 1. Therefore, the motor control device 100 according to Embodiment 1 can reduce the torque pulsation in the motor 1, particularly in the high-speed rotation range.

[Modification Example of Embodiment 1]

Here, a modification example in Embodiment 1 will be described. In Embodiment 1, a case in which the torque suppression command value calculator 21 and the disturbance suppression command value calculator 22 in the cancellation calculator 20 perform the calculation based on the current command values id_ref and iq_ref has been described as an example. However, the present invention is not limited to this. In the calculation performed by the torque suppression command value calculator 21 and the disturbance suppression command value calculator 22 in the cancellation calculator 20, the d-axis motor current id may be used instead of the current command value id_ref. In addition, the cancellation calculator 20 may use the q-axis motor current iq instead of the current command value iq_ref.

In addition, when the motor currents id and iq are transformed into fixed two-axis currents iα and iβ, the fixed two-axis currents iα and iβ are represented by the following equations (1-28) and (1-29).

$$i\alpha = \cos(\theta)\cdot id - \sin(\theta)\cdot iq \ldots \text{Equation (1-28)}$$

$$i\beta = -\sin(\theta)\cdot id - \cos(\theta)\cdot iq \ldots \text{Equation (1-29)}$$

As shown in Equations (1-28) and (1-29), in the calculation performed by the torque suppression command value calculator 21 and the disturbance suppression command value calculator 22, instead of inputting the current command values id_ref and iq_ref, the fixed two-axis currents i$\alpha$ and i$\beta$ or command values i$\alpha$_ref and i$\beta$_ref in the two-axis currents may be input.

In addition, when the expression of the fixed two-axis currents i$\alpha$ and i$\beta$ in the motor current is transformed into fixed three-phase currents iu, iv, and iw, the expression is represented by the following equations (1-30) to (1-32).

$$iu = (2/3)^{0.5}\cdot i\alpha \ldots \text{Equation (1-30)}$$

$$iv = (2/3)^{0.5}\cdot(-0.5\cdot i\alpha + 3^{0.5}/2\cdot i\beta) \ldots \text{Equation (1-31)}$$

$$iw = (2/3)^{0.5}\cdot(-0.5\cdot i\alpha - 3^{0.5}/2\cdot i\beta) \ldots \text{Equation (1-32)}$$

As shown in Equations (1-30) to (1-31), in the calculation performed by the torque suppression command value calculator 21 and the disturbance suppression command value calculator 22, instead of inputting the current command values id_ref and iq_ref, the fixed three-phase currents iu, iv, and iw or command values iu_ref, iv_ref, and iw_ref of the three-phase currents may be input.

In addition, when the current command values id_ref and iq_ref are expressed as vectors with a magnitude lamp_ref and a phase $\beta$_ref indicating a direction of the vectors, the following equations (1-33) and (1-34) are obtained. Here, the phase $\beta$_ref is a phase (angle) in the -d-axis direction with the q-axis as a reference.

$$\text{lamp\_ref} = (\text{id\_ref2} + \text{iq\_ref2})^{0.5} \ldots \text{Equation (1-33)}$$

$$\beta\_\text{ref} = \text{atan}(-\text{id\_ref}/\text{iq\_ref}) \ldots \text{Equation (1-34)}$$

As shown in Equations (1-33) and (1-34), in the calculation performed by the torque suppression command value calculator 21 and the disturbance suppression command value calculator 22, instead of inputting the current command values id_ref and iq_ref, the command value lamp_ref indicating the vector magnitude (absolute value) and the command value $\beta$_ref of the phase indicating a direction of the vector may be input. In addition, instead of the motor currents id and iq, the vector magnitude (absolute value) lamp and the command value $\beta$ of the phase indicating the direction of the vector may be input.

Equations (1-28) to (1-34) each represent a difference in expression of the motor current or the motor current command value (current command value), and finally, "current command values id_ref and iq_ref" or "motor currents id and iq" is reflected in the result of the calculation performed by the torque suppression command value calculator 21 and the disturbance suppression command value calculator 22 by changing the expression. Therefore, in the first embodiment, as shown in Figures 3 and 4, it is possible to calculate a torque pulsation suppression command value capable of responding to the torque pulsation that fluctuates when the current condition (Iq = Iq1, 1d2) in which the d-axis motor current is changed while the q-axis motor current iq is kept constant (Iq = Iq1) is set. In addition, as shown in FIGS. 7 and 8, the feedforward control can be constructed for a disturbance suppression command value capable of addressing the influence of the disturbance that fluctuates when the current condition (Iq = Iq1, Id2) in which the d-axis motor current is changed while the q-axis motor current iq is kept constant (Iq = Iq1) is set. Therefore, it is possible to suppress the torque pulsation through the feedforward control that takes into account even the high-speed rotation region that is difficult to address using a map based on the torque command Tm* as disclosed in Patent Document 1 (Japanese Patent No. 6760197).

In addition, in an operating region where noise and vibration in the motor 1 become an issue, under the condition limited to a case in which the sixth-order frequency component in terms of electrical angle is larger than the response frequency in the q-axis current controller 93, the addition of the torque pulsation suppression command value i_cancel2 via the adder 15 is not essential. That is, the adder 15 is not an essential component in Embodiment 1. Even in the configuration in which the torque pulsation suppression command value i_cancel2 is not added to the current command value iq_ref, when the sixth-order frequency component in terms of electrical angle is larger than the response frequency in the q-axis current controller 93, the torque pulsation in the motor 1 can be reduced by the action of adding the cancellation voltage command value vq_cancel to the fundamental wave command value vq. Therefore, it is possible to reduce noise and vibration.

The present disclosure is characterized by particularly suppressing the torque pulsation in the motor 1 by adding the cancellation voltage command value vq_cance in a region where the sixth-order frequency component in terms of electrical angle is larger than the response frequency in the q-axis current controller 93, and contributing to the reduction of noise and vibration. The present disclosure is extremely effective when applied to motor control of a steering system such as electric power steering and steer-by-wire. This is because in motor control of a steering system such as electric power steering and steer-by-wire, due to a demand for miniaturizing products to improve mountability, there are many cases in which a well-known lower arm three-shunt current determination method or bus bar one-shunt current determination method is applied as the current determination unit 3 used to determine the current flowing through the motor 1. These current sensors are excellent in terms of miniaturization, but are constrained by the switching pattern in the inverter 5 in terms of the possibility of determining the current and the accuracy of the determination. In particular, when a voltage utilization rate in the inverter 5 is high, the accuracy of the current determination often decreases. When the voltage utilization rate is high, that is, the rotational angular velocity in the motor 1 is large, it is desirable to prevent the q-axis current controller 93 from erroneously performing feedback control on a determination error caused by the decrease in the accuracy of the determination of the current. This limits the response frequency in the q-axis current controller 93, which causes the problem of torque pulsation due to the above-described disturbance current and fluctuations in the torque constant. On the other hand, in the present disclosure, in a region where the sixth-order frequency component in terms of electrical angle is larger than the response frequency of the q-axis current controller 93, the cancellation voltage command value vq_cancel is added to the fundamental wave command value vq, thereby making it possible to reduce the torque pulsation, noise, and vibration in the motor 1. In addition, it is possible to achieve both miniaturization and cost reduction by using the lower arm three-shunt current determination method or the bus bar one-shunt current determination method. For the above reasons, the present disclosure is applied to the motor control of the steering system such as an electric power steering and steer-by-wire, thereby achieving remarkable effects.

[Embodiment 2]

Here, Embodiment 2 will be described. The present embodiment is different from Embodiment 1 in that the motor control device 100 includes a current command value calculator 7b. In the following, configurations different from Embodiment 1 will be mainly described, and the same configurations will be denoted by the same reference numerals, and the description thereof will be omitted.

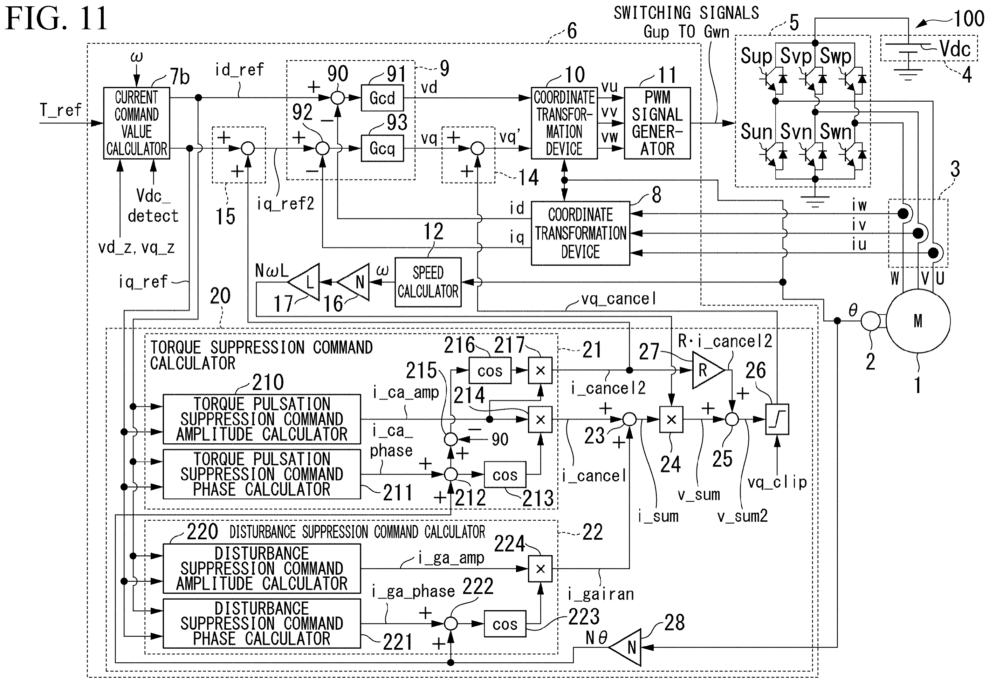

FIG. 11 is a block diagram showing the configuration of a motor control device 100 according to Embodiment 2. In the present embodiment, the motor control device 100 includes a current command value calculator 7b. The current command value calculator 7b calculates current command values id_ref and iq_ref' based on the rotational angular velocity ω of the motor 1, a determination value Vdc_detect of the DC bus voltage Vdc output from the DC power supply 4, previous calculation values vd_z and vq_z of the fundamental wave command values vd and vq, and the torque command T_ref.

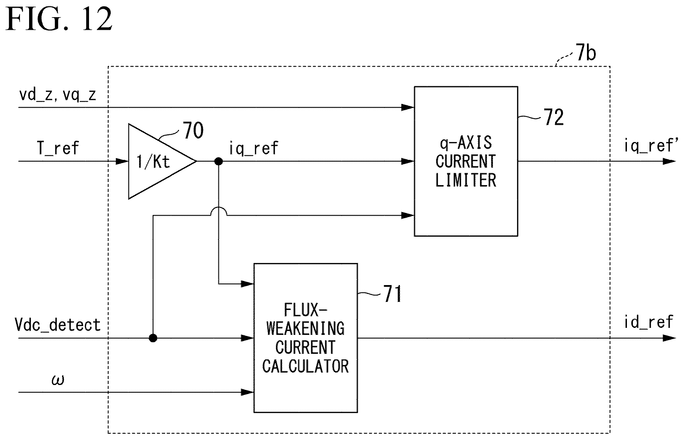

FIG. 12 is a block diagram showing the configuration of the current command value calculator 7b. The current command value calculator 7b includes an amplifier 70, a flux-weakening current calculator 71, and a q-axis current limiter 72. The amplifier 70 outputs a current command value iq_ref obtained by multiplying the torque pulsation suppression command value i_cancel by "1/Kt". Kt is a torque constant.

The q-axis current limiter 72 limits the current command value iq_ref such that the voltage utilization rate in the inverter 5 is a desired value m_ideal, based on the previous calculation values vd_z and vq_z, the current command value iq_ref, and the determination value Vdc_detect. The q-axis current limiter 72 outputs a current command value iq_ref' after the limitation.

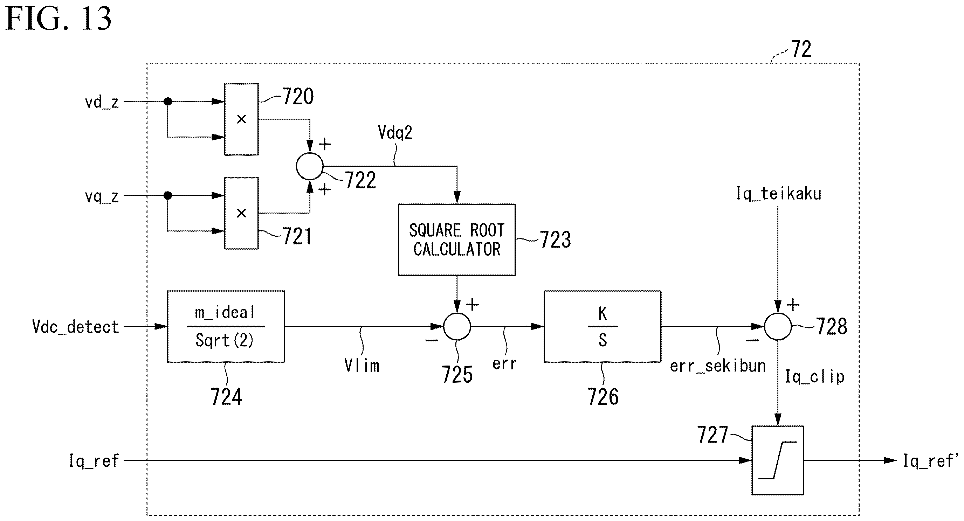

FIG. 13 is a block diagram showing the configuration of the q-axis current limiter 72. The q-axis current limiter 72 includes a multiplier 720, a multiplier 721, an adder 722, a square root calculator 723, an amplifier 724, a subtractor 725, an integrator 726, a limiter 727, and a subtractor 728.

The multiplier 720 squares the previous calculation value vd_z on the d-axis and outputs the squared value (vd_z)·(vd_z) to the adder 722. The multiplier 721 squares the previous calculation value vq_z on the q-axis and outputs the squared value (vq_z)·(vq_z) to the adder 722. The adder 722 adds the squared value (vd_z)·(vd_z) output from the multiplier 720 to the squared value (vq_z)·(vq_z) output from the multiplier 721, and outputs an added value Vdq2 to the square root calculator 723. Vdq2 is (vd_z)·(vd_z) + (vq_z)·(vq_z). The physical meaning of the added value Vdq2 is "the square of a line-to-line voltage effective value of the fundamental wave command values vd and vq". The square root calculator 723 calculates a line-to-line voltage effective value $(Vdq2)^{0.5}$, which is a square root of the added value Vdq2, and outputs the calculated value to the subtractor 725.

**EP 4 686 078 A1**

The amplifier 724 calculates a limit value Vlim obtained by multiplying the determination value Vdc_detect by a gain {m_ideal/Sqrt(2)}. m_ideal is a voltage utilization rate command value. By setting an appropriate value for m_ideal, it is possible to perform control in the downstream adder 14 such that a value obtained by adding the cancellation voltage command value vq_cancel to the fundamental wave command value vq does not exceed an upper limit value that the inverter 5 can output. The subtractor 725 outputs a deviation err obtained by subtracting the limit value Vlim from the line-to-line voltage effective value $(Vdq2)^{0.5}$ to the integrator 726. err is $(Vdq2)^{0.5}$ - Vlim. In a case where the sign of the deviation err is positive, it means that the voltage is excessive, that is, the fundamental wave command values vd and vq are larger than the voltage utilization rate command value m_ideal. In a case where the sign of the deviation err is negative, it means that the voltage is not in excess, that is, the fundamental wave command values vd and vq are equal to or less than the voltage utilization rate command value m_ideal.

The integrator 726 integrates the deviation err and outputs an integrated value err_sekibun obtained by multiplying the deviation by a gain (K/S) to the subtractor 728. The gain (K/S) is set to have a response necessary for improving the voltage excess. The subtractor 728 outputs a threshold value Iq_clip obtained by subtracting the sign of the integral value err_sekibun from a q-axis rated current Iq_teikaku, to the limiter 727. Iq_clip is Iq_teikaku - err_sekibun. The limiter 727 limits an absolute value of the q-axis current command value iq_ref such that the absolute value does not exceed the threshold value Iq_clip. The limiter 727 outputs a q-axis current command value iq_ref' after the limitation. The limiter 727 performs the limiting process according to the following cases.

In a case of (iq_ref < -iq_clip),

$$\rightarrow \text{iq\_ref'} = -\text{iq\_clip}$$

In a case of (-iq_clip < iq_ref < iq_clip),

$$\rightarrow \text{iq\_ref'} = \text{iq\_ref}$$

In a case of (iq_clip < iq_ref),

$$\rightarrow \text{iq\_ref'} = \text{iq\_clip}$$

Here, an operation of the q-axis current limiter 72 will be described. When the sign of the deviation err is positive and the fundamental wave command value is larger than the voltage utilization rate command value m_ideal, the deviation err_sekibun increases. In this case, the threshold value Iq_clip is decreased, and the q-axis current command value iq_ref is limited to a smaller value. This acts in a direction to eliminate the excess of the fundamental wave command value relative to the voltage utilization rate command value m_ideal. The deviation err_sekibun is constant at a point where the deviation err output from the integrator 726 matches zero (0), and as a result, the threshold value Iq_clip settles to a constant value. In this case, since the deviation err is 0 (zero), the voltage utilization rate of the fundamental wave command value matches the voltage utilization rate command value m_ideal. Therefore, even when the motor 1 is driven with a large rotational angular velocity and a large q-axis fundamental wave command value vq, it is possible to add the cancellation voltage command value vq_cancel to the fundamental wave command value.

Returning to FIG. 12, the flux-weakening current calculator 71 executes flux weakening control. A specific method of executing the flux weakening control will not be described because the flux weakening control is a known technology. The flux-weakening current calculator 71 outputs the d-axis current command value id_ref based on the q-axis current command value iq_ref, the determination value Vdc_detect, and the rotational angular velocity ω of the motor 1. The flux-weakening current calculator 71 calculates the d-axis current command value id_ref such that the voltage utilization rate in the inverter 5 is limited to the voltage utilization rate command value m_ideal. Note that, in order to avoid permanent demagnetization in the motor 1, the flux-weakening current calculator 71 executes the flux weakening control such that the d-axis current command value id_ref does not exceed an upper limit value id_max.

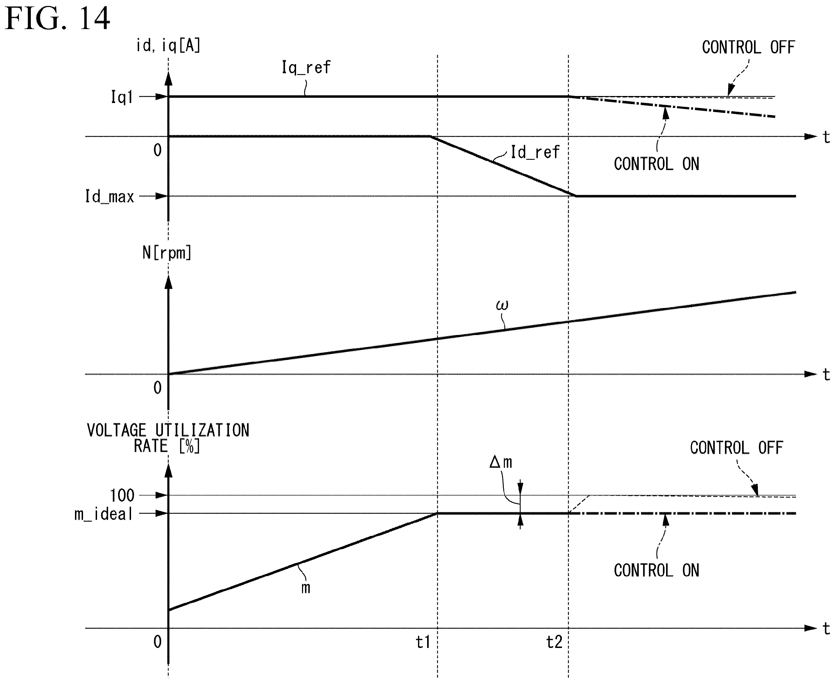

Here, an operation and an effect of the current command value calculator 7b will be described with reference to FIG. 14. FIG. 14 is a diagram for describing processing performed by the q-axis current limiter 72 according to Embodiment 2. An upper part of FIG. 14 shows a time-series change of the motor currents id and iq [A]. A middle part of FIG. 14 shows a time-series change in the rotation speed N [rpm] of the motor 1. A lower part of FIG. 14 shows a time-series change in the voltage utilization rate [%].

As shown in the upper part of FIG. 14, it is assumed that iq_ref = Iq1 and id_ref = 0 are set as the current command values at time t = 0 (zero). In this case, as shown in the middle part of FIG. 14, the rotational angular velocity ω in the motor 1 increases during a period from time t = 0 (zero) to t1. As the rotational angular velocity ω increases, the induced voltage in the motor 1 increases and the voltage utilization rate m increases as shown in the lower part of FIG. 14.

As shown in the lower part of FIG. 14, when the voltage utilization rate m reaches the command value m_ideal of the voltage utilization rate at time t = t1, the flux weakening control of the flux-weakening current calculator 71 is operated and the d-axis current command value id_ref is increased to the negative side. As shown in the upper part of FIG. 14, the d-axis current command value id_ref has a negative value, and the absolute value of the d-axis current command value id_ref is increased. As a result, as shown in the lower part of FIG. 14, the voltage utilization rate m is maintained at the command value m_ideal of the voltage utilization rate. Note that, at point t = t2, as shown in the upper part of FIG. 14, the current command value id_ref reaches id_max, and it becomes difficult to increase the absolute value of the current command value id_ref any further.

Here, as shown in a dotted line portion "control OFF" of the upper part of FIG. 14, when the limitation by the q-axis current limiter 72 is not executed, the current command value iq_ref is maintained at a constant value iq1. In this case, as shown in a dotted line portion "control OFF" of the lower part of FIG. 14, the voltage utilization rate m increases, and the voltage utilization rate m reaches 100%. In this case, since an upper limit voltage that can be output from the inverter 5 and a motor voltage corresponding to the fundamental wave command value become the same voltage, the cancellation voltage command value vq_cancel cannot be added.

On the other hand, as shown in a one-dot chain line portion "Control ON" of the upper part of FIG. 14, when the limitation by the q-axis current limiter 72 is executed, the current command value iq_ref is decreased such that the voltage utilization rate in the fundamental wave command value is limited to the voltage utilization rate command value m_ideal. In this case, as shown in a one-dot chain line portion "Control ON" of the lower part of FIG. 14, the voltage utilization rate is maintained at m_ideal without increasing the voltage utilization rate m. In this case, since the motor voltage corresponding to the fundamental wave command value is smaller than the upper limit voltage that can be output from the inverter 5, the cancellation voltage command value vq_cancel can be added.

In the present disclosure, the voltage utilization rate m in the fundamental wave command value is limited not to exceed a predetermined value. As a result, the motor 1 can be driven at an operating point equal to or lower than the set voltage utilization rate m_ideal for a voltage limit circle based on the DC bus voltage Vdc that can be output from the inverter 5. Therefore, in particular, the cancellation voltage command value vq_cancel can be added in a region where the motor rotation speed is high. Therefore, it is possible to reduce the problems such as the torque ripple, the vibration, and the noise in the motor 1.

[Modification Example of Embodiment 2]

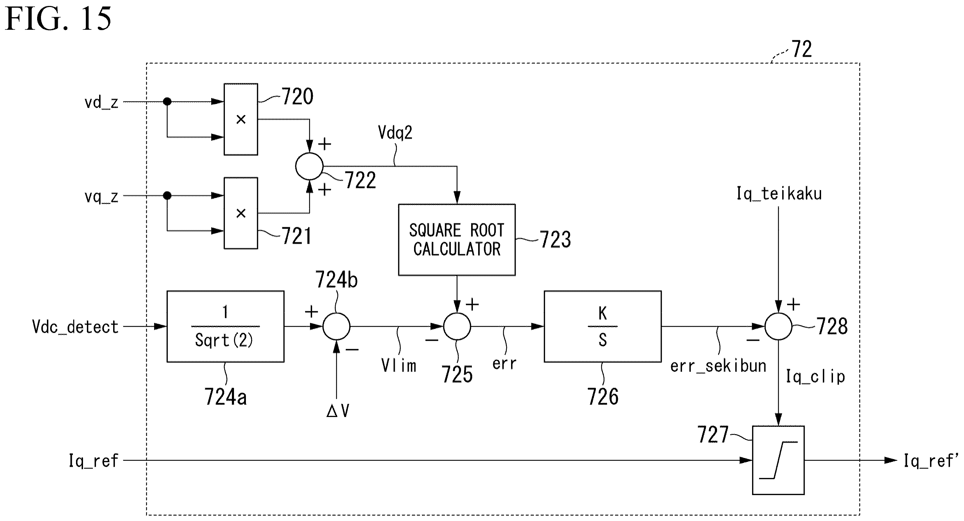

Here, a modification example in Embodiment 2 will be described with reference to FIG. 15. FIG. 15 is a diagram for describing processing performed by a q-axis current limiter according to the modification example of Embodiment 2. In Embodiment 2, the voltage utilization rate in the fundamental wave command value is limited so as not to exceed a predetermined voltage utilization rate command value m_ideal. However, the present invention is not limited to this. The fundamental wave command value may be controlled to be an operation point obtained by subtracting a predetermined "voltage value" from the DC bus voltage Vdc of the inverter 5.

As shown in FIG. 15, in the q-axis current limiter 72 according to the present modification example, an amplifier 724a and a subtractor 724b are provided instead of the amplifier 724 of the q-axis current limiter 72 in FIG. 13. The amplifier 724a outputs a value obtained by multiplying the determination value Vdc_detect by a gain {1l/Sqrt(2)} to the subtractor 274b. That is, the amplifier 724a outputs {Vdc_detect/sqrt(2)} to the subtractor 274b. The subtractor 274 outputs a value obtained by subtracting a predetermined voltage value ΔV from the value output from the amplifier 724a to the subtractor 725 as a limit value Vlim. That is, in the present modification example, Vlim is Vdc_detect/sqrt(2) - ΔV. As already described, the current command value iq_ref is controlled such that the square root of Vdq2 matches Vlim. Therefore, in the present modification example, the fundamental wave command value vq operates at an operating point having a voltage value margin of a predetermined voltage value ΔV. As a result, similarly to Embodiment 2, even when the motor 1 is rotated at a high speed, the cancellation voltage command value vq_cancel can be added to the fundamental wave command value.

[Embodiment 3]

Here, Embodiment 3 will be described. The present embodiment is different from Embodiments 1 and 2 in that a cancellation calculator 30 is provided instead of the cancellation calculator 20. In the following, configurations different from Embodiments 1 and 2 will be mainly described, and the same configurations will be denoted by the same reference numerals, and the description thereof will be omitted.

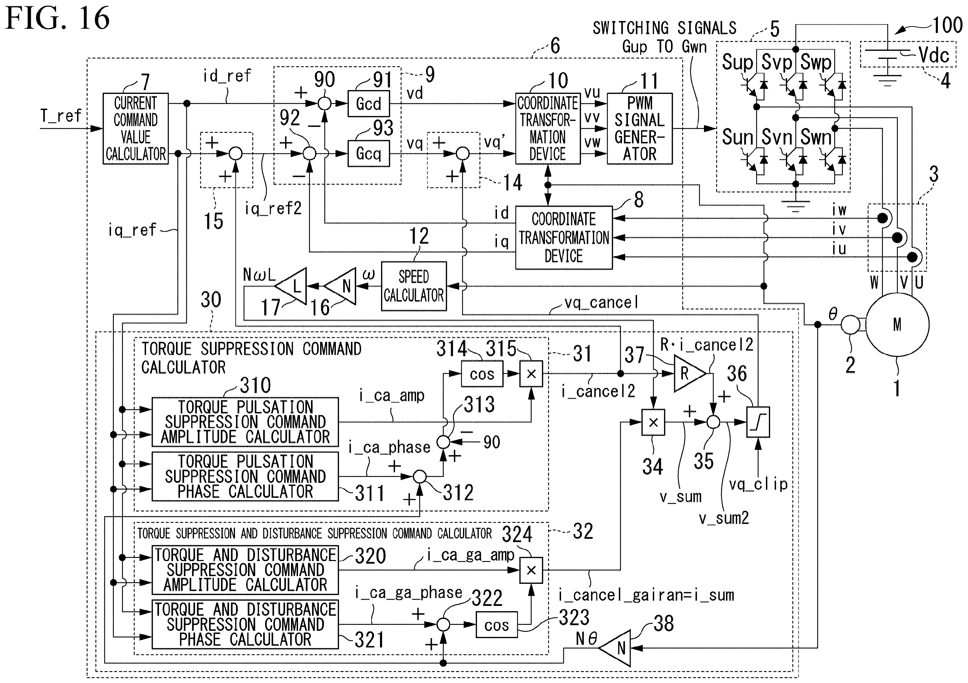

FIG. 16 is a block diagram showing the configuration of a motor control device 100 according to Embodiment 3. In the present embodiment, the motor control device 100 includes a cancellation calculator 30. The cancellation calculator 30 includes a torque suppression command value calculator 31, a torque and disturbance suppression command value calculator 32, a multiplier 34, an adder 35, a limiter 36, an amplifier 37, and an amplifier 38.

The torque suppression command value calculator 31 calculates a torque pulsation suppression command value i_cancel2 based on the current command values id_ref and iq_ref and the rotor position θ. The torque suppression command value calculator 31 is different from the torque suppression command value calculator 21 in that the torque pulsation suppression command value i_cancel is not calculated. Since the method of calculating the torque pulsation suppression command value i_cancel2 via the torque suppression command value calculator 31 is the same as the method of calculating the torque pulsation suppression command value i_cancel2 via the torque suppression command value calculator 21, the description thereof will be omitted.

The torque and disturbance suppression command value calculator 32 calculates a torque and disturbance suppression command value i_cancel_gairan based on the current command values id_ref and iq_ref and the rotor position θ. The torque and disturbance suppression command value i_cancel_gairan corresponds to the composite value i_sum output from the adder 23 of the cancellation calculator 20. The torque and disturbance suppression command value i_cancel_gairan is represented by the following equation (3-1).

$$i\_cancel\_gairan = i\_cancel + i\_gairan \ ... \ \text{Equation (3-1)}$$

The torque and disturbance suppression command value calculator 32 includes a torque and disturbance suppression command amplitude calculator 320 and a torque and disturbance suppression command phase calculator 321. The torque and disturbance suppression command amplitude calculator 320 calculates an amplitude i_ca_ga_amp. The amplitude i_ca_ga_amp is an amplitude value of the torque and disturbance suppression command value i_cancel_gairan according to the current condition. Hereinafter, a method of calculating the amplitude i_ca_ga_amp will be described.

The torque and disturbance suppression command amplitude calculator 320 calculates the amplitude i_ca_ga_amp (Id(i), Iq(j)) under the current condition (Id(i), Iq(j)). i is any integer from 1 to M. j is any integer from 1 to N.

The torque and disturbance suppression command amplitude calculator 320 refers to the torque suppression amplitude table 210Tbl, and acquires the amplitude i_ca_amp (Id(i), Iq(j)) of the current command value for suppressing the torque pulsation corresponding to the current condition (Id(i), Iq(j)). The torque and disturbance suppression command amplitude calculator 320 refers to the torque suppression phase table 211Tbl, and acquires the phase i_ca_ph (Id(i), Iq(j)) of the current command value for suppressing the torque pulsation corresponding to the current condition (Id(i), Iq(j)).

In addition, the torque and disturbance suppression command amplitude calculator 320 refers to the disturbance suppression amplitude table 220Tbl, and acquires the amplitude i_ga_amp (Id(i), Iq(j)) of the current command value for suppressing the influence of the disturbance corresponding to the current condition (Id(i), Iq(j)). The torque and disturbance suppression command amplitude calculator 320 refers to the disturbance suppression phase table 221Tbl, and acquires the phase i_ga_ph (Id(i), Iq(j)) of the current command value for suppressing the influence of the disturbance corresponding to the current condition (Id(i), Iq(j)).

Using these, the torque and disturbance suppression command amplitude calculator 320 calculates the amplitude i_ca_ga_amp using the following equation (3-2).

$$i\_ca\_ga\_amp \ (Id(i), \ Iq(j))$$

$$= \{(A + B)^2 + (C + D)^2\}^{0.5} \ ... \ \text{Equation (3-2)}$$

Note that, A = A1·cos(A2)

$$B = B1\cdot\cos(B2)$$

$$C = A1\cdot\sin(A2)$$

$$D = B1\cdot\sin(B2)$$

$$A1 = i\_ca\_amp \ (Id(i), \ Iq(j))$$

$$A2 = i\_ca\_ph \ (Id(i), \ Iq(j))$$

$$B1 = i\_ga\_amp \ (Id(i),\ Iq(j))$$

$$B2 = i\_ga\_ph \ (Id(i),\ Iq(j))$$

The torque and disturbance suppression command amplitude calculator 320 calculates in advance the amplitude i_ca_ga_amp under various current conditions in which the current is assumed to be applied to the motor 1, and stores the calculated amplitude i_ca_ga_amp in a torque and disturbance suppression amplitude table 320Tbl.

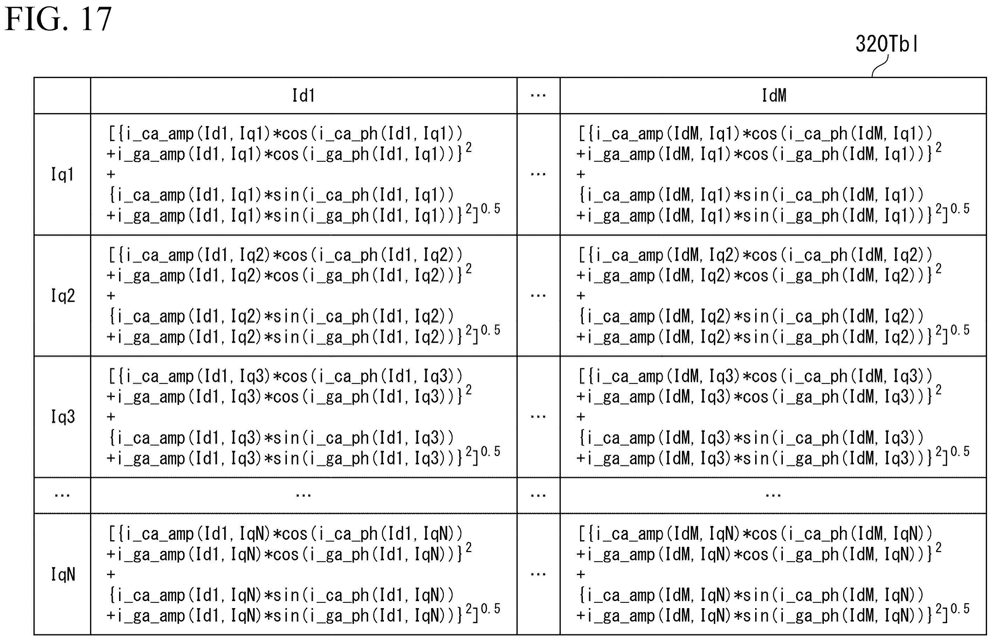

FIG. 17 is a diagram showing an example of an amplitude table according to Embodiment 3. FIG. 17 shows an example of the torque and disturbance suppression amplitude table 320Tbl. The torque and disturbance suppression amplitude table 320Tbl stores the amplitude i_ca_ga_amp according to the current condition.

The torque and disturbance suppression command phase calculator 321 calculates the phase i_ca_ga_ph according to the current condition. The phase i_ca_ga_ph is an initial phase of the torque and disturbance suppression command value i_cancel_gairan. Hereinafter, a method of calculating the phase i_ca_ga_ph will be described.

The torque and disturbance suppression command phase calculator 321 calculates the phase i_ca_ga_ph (Id(i), Iq(j)) under the current condition (Id(i), Iq(j)). i is any integer from 1 to M. j is any integer from 1 to N.

The torque and disturbance suppression command phase calculator 321 refers to the torque suppression amplitude table 210Tbl, and acquires the amplitude i_ca_amp (Id(i), Iq(j)) of the current command value for suppressing the torque pulsation corresponding to the current condition (Id(i), Iq(j)). The torque and disturbance suppression command amplitude calculator 320 refers to the torque suppression phase table 211Tbl, and acquires the phase i_ca_ph (Id(i), Iq(j)) of the current command value for suppressing the torque pulsation corresponding to the current condition (Id(i), Iq(j)).

In addition, the torque and disturbance suppression command phase calculator 321 refers to the disturbance suppression amplitude table 220Tbl, and acquires the amplitude i_ga_amp (Id(i), Iq(j)) of the current command value for suppressing the influence of the disturbance corresponding to the current condition (Id(i), Iq(j)). The torque and disturbance suppression command amplitude calculator 320 refers to the disturbance suppression phase table 221Tbl, and acquires the phase i_ga_ph (Id(i), Iq(j)) of the current command value for suppressing the influence of the disturbance corresponding to the current condition (Id(i), Iq(j)).

Using these, the torque and disturbance suppression command phase calculator 321 calculates the phase i_ca_ga_ph using the following equation (3-3).

$$i\_ca\_ga\_ph \ (Id(i),\ Iq(j))$$

$$= ATAN2\{(A+B),\ (C+D)\} + 90 \ ... \ Equation\ (3\text{-}3)$$

Note that, A = A1·cos(A2)

$$B = B1 \cdot \cos(B2)$$

$$C = A1 \cdot \sin(A2)$$

$$D = B1 \cdot \sin(B2)$$

$$A1 = i\_ca\_amp \ (Id(i),\ Iq(j))$$

$$A2 = i\_ca\_ph \ (Id(i),\ Iq(j))$$

$$B1 = i\_ga\_amp \ (Id(i),\ Iq(j))$$

$$B2 = i\_ga\_ph \ (Id(i),\ Iq(j))$$

The torque and disturbance suppression command phase calculator 321 calculates in advance the phase i_ca_ga_ph under various current conditions in which the current is assumed to be applied to the motor 1, and stores the calculated phase i_ca_ga_ph in a torque and disturbance suppression phase table 321Tbl.

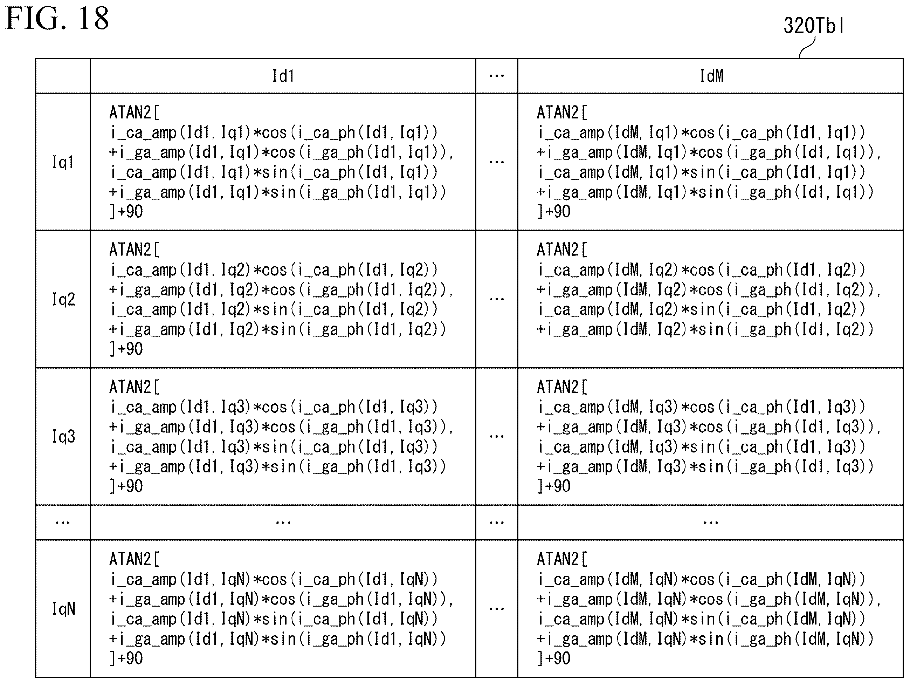

FIG. 18 is a diagram showing an example of a phase table according to Embodiment 3. FIG. 18 shows an example of the torque and disturbance suppression phase table 321Tbl. The torque and disturbance suppression phase table 321Tbl stores the phase i_ca_ga_ph according to the current condition.

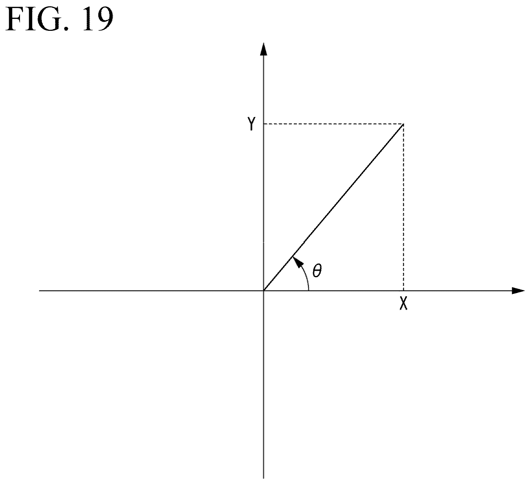

FIG. 19 is a diagram for describing processing performed by the torque and disturbance suppression command phase calculator 321 according to Embodiment 3. FIG. 19 shows coordinates for describing the calculation of the ATAN2. As shown in FIG. 19, θ [deg] is ATAN2 (X, Y).

When the motor 1 is rotated, the current command values id_ref and iq_ref are input to the torque and disturbance suppression command amplitude calculator 320. The torque and disturbance suppression command amplitude calculator 320 refers to the torque and disturbance suppression amplitude table 320Tbl based on the input current command values id_ref and iq_ref, and acquires an amplitude i_ca_ga_amp (id_ref, iq_ref) corresponding to a current condition (id_ref, iq_ref). The torque and disturbance suppression command amplitude calculator 320 outputs the acquired amplitude i_ca_ga_amp (id_ref, iq_ref) as the amplitude i_ca_ga_amp of the current command value for suppressing the torque and suppressing the influence of the disturbance in the motor 1.

The torque and disturbance suppression command amplitude calculator 320 may calculate the amplitude i_ca_ga_amp by performing linear interpolation. The torque and disturbance suppression command amplitude calculator 320 calculates the amplitude i_ca_ga_amp using linear interpolation, for example, in a case where the current command value iq_ref under the current condition for which the amplitude is to be calculated is a current value that is midway between the motor currents Iq1 and Iq2 in the torque and disturbance suppression amplitude table 320Tbl.

When the motor 1 is rotated, the current command values id_ref and iq_ref are input to the torque and disturbance suppression command phase calculator 321. The torque and disturbance suppression command phase calculator 321 refers to the torque and disturbance suppression phase table 321Tbl based on the input current command values id_ref and iq_ref, and acquires a phase i_ca_ga_ph (id_ref, iq_ref) corresponding to a current condition (id_ref, iq_ref). The torque and disturbance suppression command phase calculator 321 outputs the acquired phase i_ca_ga_ph (id_ref, iq_ref) as the phase i_ca_ga_ph of the current command value for suppressing the torque and suppressing the influence of the disturbance in the motor 1.

The torque and disturbance suppression command phase calculator 321 may calculate the phase i_ca_ga_ph by performing linear interpolation. The torque and disturbance suppression command phase calculator 321 calculates the phase i_ca_ga_ph using linear interpolation, for example, in a case where the current command value iq_ref under the current condition for which the phase is to be calculated is a current value that is midway between the motor currents Iq1 and Iq2 in the torque and disturbance suppression phase table 321Tbl.

Although the amplitude i_ca_ga_amp represented by Equation (3-2) and the phase i_ca_ga_ph represented by Equation (3-3) are complicated, the phase and the amplitude need only be calculated in advance and stored in a table. It is not necessary to calculate the amplitude i_ca_ga_amp and the phase i_ca_ga_ph each time the cancellation voltage command value vq_cancel is calculated by the cancellation calculator 20. Therefore, as in Embodiment 1, it is not necessary to calculate the amplitude and the phase of the composite value i_sum (= torque and disturbance suppression command value i_cancel_gairan) each time the cancellation voltage command value vq_cancel is calculated.

In addition, as described in Embodiment 1, in an operating region where noise and vibration in the motor 1 become an issue, under the condition limited to a case in which the sixth-order frequency component in terms of electrical angle is larger than the response frequency in the q-axis current controller 93, the addition of the torque pulsation suppression current iq_cancel2 via the adder 15 is not essential. Even in the configuration in which the torque pulsation suppression command value i_cancel2 is not added to the current command value iq_ref, when the sixth-order frequency component in terms of electrical angle is larger than the response frequency in the q-axis current controller 93, the torque pulsation in the motor 1 can be reduced by the action of adding the cancellation voltage command value vq_cancel to the fundamental wave command value vq. Therefore, it is possible to reduce noise and vibration. In addition, in the present embodiment, since only the calculation using the torque and disturbance suppression command value i_cancel_gairan output from the torque and disturbance suppression command value calculator 32 is executed by the cancellation calculator 30, it is possible to further reduce the amount of calculation effort as compared with Embodiment 1.

[Embodiment 4]

Here, Embodiment 4 will be described. The present embodiment is different from Embodiments 1 to 3 described above in that a d-axis cancellation voltage command value vd_cancel is added to the d-axis fundamental wave command value vd. In the following, configurations different from Embodiments 1 and 2 will be mainly described, and the same configurations will be denoted by the same reference numerals, and the description thereof will be omitted.

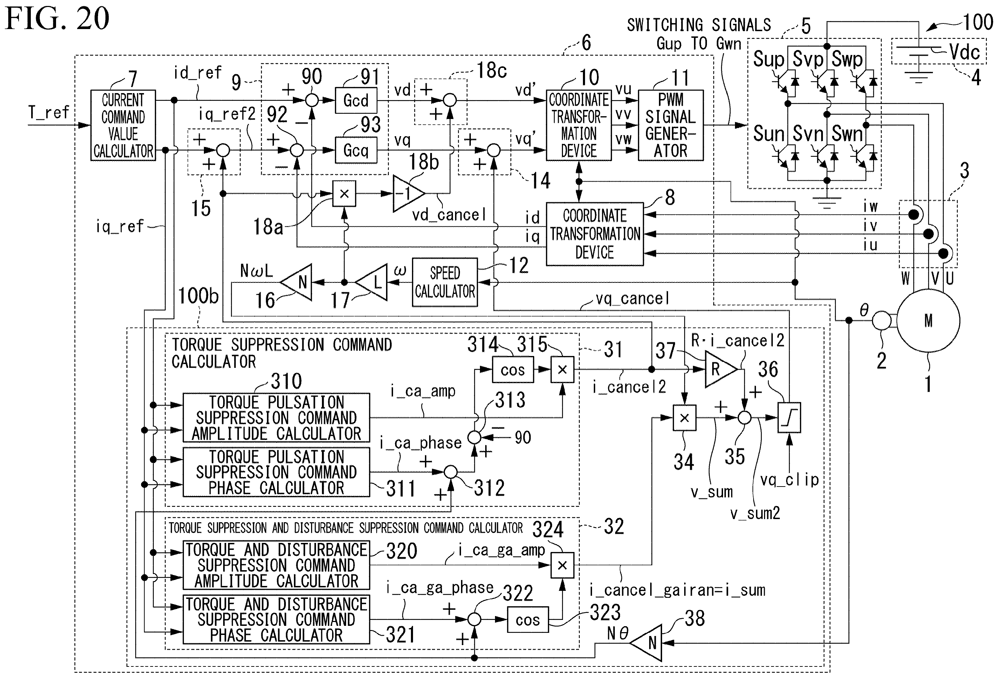

FIG. 20 is a block diagram showing the configuration of a motor control device 100 according to Embodiment 4. In the present embodiment, the controller 6 of the motor control device 100 includes a multiplier 18a, an amplifier 18b, and an adder 18c.

The adder 18c adds a d-axis cancellation voltage command value vd_cancel, which will be described below, to the d-axis fundamental wave command value vd output from the current controller 9, and outputs a fundamental wave command value vd' after the addition as an output. The d-axis cancellation voltage command value vd_cancel is represented by Equation (4-1). ω is the rotational angular velocity of the motor 1. Lis the inductance of the motor 1.

$$vd\_cancel = -\omega \cdot L \cdot i\_cancel2 \ ... \ \text{Equation (4-1)}$$

A process of deriving the d-axis cancellation voltage command value vd_cancel shown in Equation (4-1) will be specifically described. The amplifier 17 outputs a value (ωL) obtained by multiplying the rotational angular velocity ω output from the speed calculator 12 by the constant L to the multiplier 18a. The multiplier 18a outputs a value obtained by multiplying the torque pulsation suppression command value i_cancel2 output from the cancellation calculator 30 by ωL to the amplifier 18b. The amplifier 18b multiplies the value output from the multiplier 18a by -1 and outputs the multiplied value to the adder 18c.

The coordinate transformation device 10 performs coordinate transformation on the fundamental wave command values vd' and vq' after adding the cancellation voltage command values to output the three-phase fundamental wave command values vu, vv, and vw.

Hereinafter, the effect of adding the d-axis cancellation voltage command value vd_cancel to the d-axis fundamental wave command value vd will be described. The fundamental wave command value vd' after adding the cancellation voltage command value is represented by Equation (4-2).

$$vd' = vd + vd\_cancel = vd - \omega \cdot L \cdot i\_cancel2 \ ... \ \text{Equation (4-2)}$$

Here, when the sixth-order frequency component in terms of electrical angle becomes greater than the response frequency in the d-axis current controller 91, the fundamental wave command value vd does not include the sixth-order frequency component in terms of electrical angle. Therefore, in the present embodiment, the cancellation voltage command value vd_cancel is added to the fundamental wave command value vd on the d-axis. As a result, the d-axis fundamental wave command value vibrates at the sixth-order frequency in terms of electrical angle, resulting in a waveform that matches i_cancel2. Therefore, the torque ripple in the motor 1 is reduced, and it is possible to reduce vibration and noise.

The present disclosure is not limited to each of the above-described embodiments, and can be modified without departing from the spirit and scope of the present disclosure. Each of the above-described embodiments may be implemented alone, and some or all of the above-described embodiments may be implemented in combination. The embodiments can be freely combined, and each embodiment can be modified or omitted as appropriate.

For example, in a case of an interior permanent magnet synchronous motor or a synchronous reluctance motor having a large ratio of the relaxant torque, not only the torque pulsation suppression command values i_cancel and i_cancel2 on the q-axis but also the torque pulsation suppression command values id_cancel and id_cancel2 on the d-axis may be used as the torque pulsation suppression command values. Further, as the disturbance pulsation suppression command values, not only the disturbance suppression command value i_gairan on the q-axis but also the disturbance suppression command value id_gairan on the d-axis may be used. Using these, the cancellation voltage command value on the d-axis may be added to the d-axis fundamental wave command value vd, and the command value after the addition may be used as the voltage to be applied to the motor 1. Even in such a configuration, the same effect is exhibited.

The motor control device 100 described above includes a computer system therein. The steps of the above-mentioned processing are stored in a computer-readable recording medium in a form of a program, and the above-mentioned processing is performed by the computer reading and executing this program. Here, the computer-readable recording medium refers to a magnetic disk, a magneto-optical disk, a CD-ROM, a DVD-ROM, a semiconductor memory, and the like. Alternatively, this computer program may be distributed to a computer via a communication line, and the computer receiving the distribution may execute the program.

REFERENCE SIGNS LIST

100 Motor control device
1 Motor
2 Rotation position determination unit
3 Current determination unit
4 DC power supply

5 Inverter
6 Controller
7 Current command value calculator
8 Coordinate transformation device
9 Current controller
10 Coordinate transformation device
11 PWM signal generator
12 Speed calculator 12
20 Cancellation calculator
21 Torque suppression command value calculator
22 Disturbance suppression command value calculator

**Claims**

1. A motor control device comprising:

   an inverter configured to supply power to a motor; and
   a controller configured to control the motor and output a command signal to the inverter,
   wherein the controller includes
   a current command value calculator configured to calculate a current command value for two rotating axes of the motor,
   a voltage command value calculator configured to calculate a fundamental wave command value, which is a voltage command value for the two rotating axes of the motor, through feedback control of the current command value,
   a cancellation calculator configured to calculate a cancellation voltage command value for suppressing torque pulsation of the motor and suppressing an influence of a disturbance generated in the motor, based on a target current, which is either the current command value or a motor current flowing through the motor, and a rotor position of the motor, and
   a PWM signal generator configured to generate the command signal to be output to the inverter by using a post-addition fundamental wave command value obtained by adding the cancellation voltage command value to the fundamental wave command value.

2. The motor control device according to Claim 1,

   wherein the controller includes
   a torque suppression command value calculator configured to calculate a torque pulsation suppression command value, which is a command value of a current for suppressing the torque pulsation of the motor, based on the target current and the rotor position, and
   a disturbance suppression command value calculator configured to calculate a disturbance suppression command value, which is a command value of a current for suppressing the influence of the disturbance, based on the target current and the rotor position, and
   the cancellation calculator is configured to calculate the cancellation voltage command value based on the torque pulsation suppression command value and the disturbance suppression command value.

3. The motor control device according to Claim 2,
   wherein the controller is configured to calculate the torque pulsation suppression command value and the disturbance suppression command value based on the target current related to a d-axis and a q-axis.

4. The motor control device according to Claim 2 or 3,
   wherein the controller is configured to add a value obtained by multiplying the disturbance suppression command value by a coefficient including a rotational angular velocity of the motor, to the fundamental wave command value as the cancellation voltage command value.

5. The motor control device according to Claim 2 or 3,
   wherein the controller is configured to add a value obtained by multiplying the torque pulsation suppression command value by a coefficient including a rotational angular velocity of the motor, to the fundamental wave command value as the cancellation voltage command value.

6. The motor control device according to Claim 2 or 3,
wherein the controller is configured to add a value obtained by multiplying a composite value obtained by adding the torque pulsation suppression command value and the disturbance suppression command value by a coefficient including a rotational angular velocity of the motor, to the fundamental wave command value as the cancellation voltage command value.

7. The motor control device according to Claim 5 or 6,
wherein the controller is configured to add the torque pulsation suppression command value to the current command value.

8. The motor control device according to any one of Claims 2 to 6,

wherein the current command value calculator is configured to limit the current command value such that an output voltage of the inverter is at an operating point equal to or lower than a voltage utilization rate set for a voltage limit circle based on a DC bus voltage of the inverter or an operating point obtained by subtracting a predetermined voltage value from the DC bus voltage of the inverter, and
the controller is configured to calculate the torque pulsation suppression command value and the disturbance suppression command value based on the current command value limited by the current command value calculator.

9. The motor control device according to any one of Claims 2 to 7,
wherein the controller is configured to calculate the disturbance suppression command value to suppress a current corresponding to a component to be suppressed among distortion components contained in the motor current applied when a sine wave voltage is applied to the motor due to impedance distortion of the motor.

10. The motor control device according to any one of Claims 2 to 9,
wherein the controller is configured to calculate the torque pulsation suppression command value to suppress torque pulsation occurring in the motor when a sine wave current is applied to the motor.

11. The motor control device according to any one of Claims 1 to 10,
wherein the controller is configured to limit the cancellation voltage command value based on a limit value based on a rotational angular velocity and an electrical constant of the motor and add the cancellation voltage command value after the limitation to the fundamental wave command value.

FIG. 1

FIG. 2

FIG. 3

TORQUE PULSATION SUPPRESSION COMMAND
CALCULATION AT Id = Id1, Iq = Iq1

MOTOR ANGLE [deg]

MOTOR ANGLE [deg]

i_ca_amp
(Id1, Iq1)

i_ca_ph
(Id1, Iq1)

MOTOR ANGLE [deg]

# FIG. 4

TORQUE PULSATION SUPPRESSION COMMAND
CALCULATION AT Id = Id2, Iq = Iq1

MOTOR ANGLE [deg]

MOTOR ANGLE [deg]

i_ca_amp
(Id2, Iq1)

i_ca_ph
(Id2, Iq1)

MOTOR ANGLE [deg]

# FIG. 5

210Tbl

|  | Id1 | Id2 | ... | IdM |
|---|---|---|---|---|
| Iq1 | i_ca_amp(Id1, Iq1) | i_ca_amp(Id2, Iq1) | ... | i_ca_amp(IdM, Iq1) |
| Iq2 | i_ca_amp(Id1, Iq2) | i_ca_amp(Id2, Iq2) | ... | i_ca_amp(IdM, Iq2) |
| Iq3 | i_ca_amp(Id1, Iq3) | i_ca_amp(Id2, Iq3) | ... | i_ca_amp(IdM, Iq3) |
| ... | ... | ... | ... | ... |
| IqN | i_ca_amp(Id1, IqN) | i_ca_amp(Id2, IqN) | ... | i_ca_amp(IdM, IqN) |

# FIG. 6

211Tbl

|  | Id1 | Id2 | ... | IdM |
|---|---|---|---|---|
| Iq1 | i_ca_ph(Id1, Iq1)+90 | i_ca_ph(Id2, Iq1)+90 | ... | i_ca_ph(IdM, Iq1)+90 |
| Iq2 | i_ca_ph(Id1, Iq2)+90 | i_ca_ph(Id2, Iq2)+90 | ... | i_ca_ph(IdM, Iq2)+90 |
| Iq3 | i_ca_ph(Id1, Iq3)+90 | i_ca_ph(Id2, Iq3)+90 | ... | i_ca_ph(IdM, Iq3)+90 |
| ... | ... | ... | ... | ... |
| IqN | i_ca_ph(Id1, IqN)+90 | i_ca_ph(Id2, IqN)+90 | ... | i_ca_ph(IdM, IqN)+90 |

FIG. 7

DISTURBANCE SUPPRESSION COMMAND
CALCULATION AT Id = Id1, Iq = Iq1

MOTOR ANGLE [deg]

i_ga_amp
(Id1, Iq1)

MOTOR ANGLE [deg]

i_ga_ph
(Id1, Iq1)

FIG. 8

DISTURBANCE SUPPRESSION COMMAND
CALCULATION AT Id = Id2, Iq = Iq1

MOTOR ANGLE [deg]

i_ga_amp
(Id2, Iq1)

MOTOR ANGLE [deg]

i_ga_ph
(Id2, Iq1)

## FIG. 9

220Tbl

|  | Id1 | Id2 | ⋯ | IdM |
|---|---|---|---|---|
| Iq1 | i_ga_amp(Id1, Iq1) | i_ga_amp(Id2, Iq1) | ⋯ | i_ga_amp(IdM, Iq1) |
| Iq2 | i_ga_amp(Id1, Iq2) | i_ga_amp(Id2, Iq2) | ⋯ | i_ga_amp(IdM, Iq2) |
| Iq3 | i_ga_amp(Id1, Iq3) | i_ga_amp(Id2, Iq3) | ⋯ | i_ga_amp(IdM, Iq3) |
| ⋯ | ⋯ | ⋯ | ⋯ | ⋯ |
| IqN | i_ga_amp(Id1, IqN) | i_ga_amp(Id2, IqN) | ⋯ | i_ga_amp(IdM, IqN) |

## FIG. 10

221Tbl

|  | Id1 | Id2 | ⋯ | IdM |
|---|---|---|---|---|
| Iq1 | i_ga_ph(Id1, Iq1)+90 | i_ga_ph(Id2, Iq1)+90 | ⋯ | i_ga_ph(IdM, Iq1)+90 |
| Iq2 | i_ga_ph(Id1, Iq2)+90 | i_ga_ph(Id2, Iq2)+90 | ⋯ | i_ga_ph(IdM, Iq2)+90 |
| Iq3 | i_ga_ph(Id1, Iq3)+90 | i_ga_ph(Id2, Iq3)+90 | ⋯ | i_ga_ph(IdM, Iq3)+90 |
| ⋯ | ⋯ | ⋯ | ⋯ | ⋯ |
| IqN | i_ga_ph(Id1, IqN)+90 | i_ga_ph(Id2, IqN)+90 | ⋯ | i_ga_ph(IdM, IqN)+90 |

FIG. 11

# FIG. 12

FIG. 13

# FIG. 14

EP 4 686 078 A1

# FIG. 15

FIG. 16

# FIG. 17

EP 4 686 078 A1

320Tbl

| | Id1 | ... | IdM |
|---|---|---|---|
| Iq1 | [{i_ca_amp(Id1, Iq1)*cos(i_ca_ph(Id1, Iq1))<br>+i_ga_amp(Id1, Iq1)*cos(i_ga_ph(Id1, Iq1))}$^2$<br>+<br>{i_ca_amp(Id1, Iq1)*sin(i_ca_ph(Id1, Iq1))<br>+i_ga_amp(Id1, Iq1)*sin(i_ga_ph(Id1, Iq1))}$^2$]$^{0.5}$ | ... | [{i_ca_amp(IdM, Iq1)*cos(i_ca_ph(IdM, Iq1))<br>+i_ga_amp(IdM, Iq1)*cos(i_ga_ph(IdM, Iq1))}$^2$<br>+<br>{i_ca_amp(IdM, Iq1)*sin(i_ca_ph(IdM, Iq1))<br>+i_ga_amp(IdM, Iq1)*sin(i_ga_ph(IdM, Iq1))}$^2$]$^{0.5}$ |
| Iq2 | [{i_ca_amp(Id1, Iq2)*cos(i_ca_ph(Id1, Iq2))<br>+i_ga_amp(Id1, Iq2)*cos(i_ga_ph(Id1, Iq2))}$^2$<br>+<br>{i_ca_amp(Id1, Iq2)*sin(i_ca_ph(Id1, Iq2))<br>+i_ga_amp(Id1, Iq2)*sin(i_ga_ph(Id1, Iq2))}$^2$]$^{0.5}$ | ... | [{i_ca_amp(IdM, Iq2)*cos(i_ca_ph(IdM, Iq2))<br>+i_ga_amp(IdM, Iq2)*cos(i_ga_ph(IdM, Iq2))}$^2$<br>+<br>{i_ca_amp(IdM, Iq2)*sin(i_ca_ph(IdM, Iq2))<br>+i_ga_amp(IdM, Iq2)*sin(i_ga_ph(IdM, Iq2))}$^2$]$^{0.5}$ |
| Iq3 | [{i_ca_amp(Id1, Iq3)*cos(i_ca_ph(Id1, Iq3))<br>+i_ga_amp(Id1, Iq3)*cos(i_ga_ph(Id1, Iq3))}$^2$<br>+<br>{i_ca_amp(Id1, Iq3)*sin(i_ca_ph(Id1, Iq3))<br>+i_ga_amp(Id1, Iq3)*sin(i_ga_ph(Id1, Iq3))}$^2$]$^{0.5}$ | ... | [{i_ca_amp(IdM, Iq3)*cos(i_ca_ph(IdM, Iq3))<br>+i_ga_amp(IdM, Iq3)*cos(i_ga_ph(IdM, Iq3))}$^2$<br>+<br>{i_ca_amp(IdM, Iq3)*sin(i_ca_ph(IdM, Iq3))<br>+i_ga_amp(IdM, Iq3)*sin(i_ga_ph(IdM, Iq3))}$^2$]$^{0.5}$ |
| ... | ... | ... | ... |
| IqN | [{i_ca_amp(Id1, IqN)*cos(i_ca_ph(Id1, IqN))<br>+i_ga_amp(Id1, IqN)*cos(i_ga_ph(Id1, IqN))}$^2$<br>+<br>{i_ca_amp(Id1, IqN)*sin(i_ca_ph(Id1, IqN))<br>+i_ga_amp(Id1, IqN)*sin(i_ga_ph(Id1, IqN))}$^2$]$^{0.5}$ | ... | [{i_ca_amp(IdM, IqN)*cos(i_ca_ph(IdM, IqN))<br>+i_ga_amp(IdM, IqN)*cos(i_ga_ph(IdM, IqN))}$^2$<br>+<br>{i_ca_amp(IdM, IqN)*sin(i_ca_ph(IdM, IqN))<br>+i_ga_amp(IdM, IqN)*sin(i_ga_ph(IdM, IqN))}$^2$]$^{0.5}$ |

# FIG. 18

EP 4 686 078 A1

320Tbl

| | Id1 | ... | IdM |
|---|---|---|---|
| Iq1 | ATAN2[<br>i_ca_amp(Id1,Iq1)*cos(i_ca_ph(Id1,Iq1))<br>+i_ga_amp(Id1,Iq1)*cos(i_ga_ph(Id1,Iq1)),<br>i_ca_amp(Id1,Iq1)*sin(i_ca_ph(Id1,Iq1))<br>+i_ga_amp(Id1,Iq1)*sin(i_ga_ph(Id1,Iq1))<br>]+90 | ... | ATAN2[<br>i_ca_amp(IdM,Iq1)*cos(i_ca_ph(Id1,Iq1))<br>+i_ga_amp(IdM,Iq1)*cos(i_ga_ph(Id1,Iq1)),<br>i_ca_amp(IdM,Iq1)*sin(i_ca_ph(Id1,Iq1))<br>+i_ga_amp(IdM,Iq1)*sin(i_ga_ph(Id1,Iq1))<br>]+90 |
| Iq2 | ATAN2[<br>i_ca_amp(Id1,Iq2)*cos(i_ca_ph(Id1,Iq2))<br>+i_ga_amp(Id1,Iq2)*cos(i_ga_ph(Id1,Iq2)),<br>i_ca_amp(Id1,Iq2)*sin(i_ca_ph(Id1,Iq2))<br>+i_ga_amp(Id1,Iq2)*sin(i_ga_ph(Id1,Iq2))<br>]+90 | ... | ATAN2[<br>i_ca_amp(IdM,Iq2)*cos(i_ca_ph(Id1,Iq2))<br>+i_ga_amp(IdM,Iq2)*cos(i_ga_ph(Id1,Iq2)),<br>i_ca_amp(IdM,Iq2)*sin(i_ca_ph(Id1,Iq2))<br>+i_ga_amp(IdM,Iq2)*sin(i_ga_ph(Id1,Iq2))<br>]+90 |
| Iq3 | ATAN2[<br>i_ca_amp(Id1,Iq3)*cos(i_ca_ph(Id1,Iq3))<br>+i_ga_amp(Id1,Iq3)*cos(i_ga_ph(Id1,Iq3)),<br>i_ca_amp(Id1,Iq3)*sin(i_ca_ph(Id1,Iq3))<br>+i_ga_amp(Id1,Iq3)*sin(i_ga_ph(Id1,Iq3))<br>]+90 | ... | ATAN2[<br>i_ca_amp(IdM,Iq3)*cos(i_ca_ph(Id1,Iq3))<br>+i_ga_amp(IdM,Iq3)*cos(i_ga_ph(Id1,Iq3)),<br>i_ca_amp(IdM,Iq3)*sin(i_ca_ph(Id1,Iq3))<br>+i_ga_amp(IdM,Iq3)*sin(i_ga_ph(Id1,Iq3))<br>]+90 |
| ... | ... | ... | ... |
| IqN | ATAN2[<br>i_ca_amp(Id1,IqN)*cos(i_ca_ph(Id1,IqN))<br>+i_ga_amp(Id1,IqN)*cos(i_ga_ph(Id1,IqN)),<br>i_ca_amp(Id1,IqN)*sin(i_ca_ph(Id1,IqN))<br>+i_ga_amp(Id1,IqN)*sin(i_ga_ph(Id1,IqN))<br>]+90 | ... | ATAN2[<br>i_ca_amp(IdM,IqN)*cos(i_ca_ph(IdM,IqN))<br>+i_ga_amp(IdM,IqN)*cos(i_ga_ph(IdM,IqN)),<br>i_ca_amp(IdM,IqN)*sin(i_ca_ph(IdM,IqN))<br>+i_ga_amp(IdM,IqN)*sin(i_ga_ph(IdM,IqN))<br>]+90 |

FIG. 19

FIG. 20

**EP 4 686 078 A1**

## INTERNATIONAL SEARCH REPORT

International application No.

**PCT/JP2023/011084**

| A. | CLASSIFICATION OF SUBJECT MATTER |
|---|---|

*H02P 21/05*(2006.01)i; *H02P 27/08*(2006.01)i
FI:    H02P21/05; H02P27/08

According to International Patent Classification (IPC) or to both national classification and IPC

| B. | FIELDS SEARCHED |
|---|---|

Minimum documentation searched (classification system followed by classification symbols)

H02P21/05; H02P27/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-178439 A (MITSUBISHI ELECTRIC CORPORATION) 29 October 2020 (2020-10-29) paragraphs [0001]-[0092], fig. 1-8 | 1-6, 8 |
| Y | | 7, 9-11 |
| Y | JP 2017-209012 A (FUJITSU GENERAL LIMITED) 24 November 2017 (2017-11-24) paragraphs [0035], [0057]-[0058], [0077] | 7, 9-11 |
| A | JP 2023-7752 A (KABUSHIKI KAISHA KOBE SEIKO SHO) 19 January 2023 (2023-01-19) paragraphs [0001]-[0093], fig. 1-6 | 1–11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 May 2023** | **06 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

45

## INTERNATIONAL SEARCH REPORT
### Information on patent family members

| International application No. |
|---|
| **PCT/JP2023/011084** |

| Patent document cited in search report | | | Publication date (day/month/year) | Patent family member(s) | | | Publication date (day/month/year) |
|---|---|---|---|---|---|---|---|
| JP | 2020-178439 | A | 29 October 2020 | US | 2022/0103102 | A1 | |
| | | | | paragraphs [0001]-[0108], fig. 1-8 | | | |
| | | | | EP | 3958457 | A1 | |
| | | | | CN | 113661649 | A | |
| JP | 2017-209012 | A | 24 November 2017 | (Family: none) | | | |
| JP | 2023-7752 | A | 19 January 2023 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6760197 B

- JP 7090812 B